(19) Europäisches Patentamt

European Patent Office

Office européen des brevets

(11) Publication number: **0 121 279**
**B1**

(12) **EUROPEAN PATENT SPECIFICATION**

(45) Date of publication of patent specification: **04.10.89**

(21) Application number: **84200430.1**

(22) Date of filing: **27.03.84**

(51) Int. Cl.⁴: **A 01 F 15/00**

(54) **Agricultural balers.**

(30) Priority: **29.03.83 GB 8308564**
**11.02.84 GB 8403643**

(43) Date of publication of application:
**10.10.84 Bulletin 84/41**

(45) Publication of the grant of the patent:
**04.10.89 Bulletin 89/40**

(84) Designated Contracting States:
**DE FR GB**

(56) References cited:
**FR-A-2 448 282**
**GB-A-2 090 560**
**US-A-4 121 513**

(73) Proprietor: **FORD NEW HOLLAND N.V.**
**Leon Claeysstraat 3a**
**B-8210 Zedelgem (BE)**

(72) Inventor: **Decoene, Frans J.G.C.**
**Ruddervoordestraat 19**
**B-8210 Zedelgem (BE)**
Inventor: **De Busscher, Cyriel R.J.**
**Stationsstraat 183**
**B-8340 Damme (Sijsele) (BE)**

(74) Representative: **Vandenbroucke, Alberic T.J.**
**et al**
**Ford New Holland NV. Patent Department Leon**
**Claeysstraat, 3A**
**B-8210 Zedelgem (BE)**

Courier Press, Leamington Spa, England.

## Description

This invention relates to agricultural balers and more particularly to so-called round balers which produce cylindrical bales or rolls of crop material.

In general, round balers are of two types: the expanding chamber type such as disclosed in e.g. EP-A-35.114, FR-A-2.448.282 and GB-A-2.090.560 and which produces bales with a relatively hard core and a generally high and relatively constant density throughout; and the fixed chamber type such as disclosed in e.g. GB-A-2.128.542 and which produces bales with a relatively soft core but a relatively compacted or hard outer layer or shell.

An advantage of hard core balers is that they pack more crop material into a bale than similarly sized soft core balers. They also can produce bales of any size up to a maximum which a given machine is capable of producing, with all sizes of bales being in generally good order from the standpoint of being subjected to handling without falling apart.

The advantages of soft core balers are that:

- they produce bales with a reduced tendency to moulding if the crop material is baled wet;
- the bale core presents no problems to cattle when feeding from the bale (whereas hard cores can be difficult to tear apart);
- they produce bales with good weathering characteristics due to the hard shell; the latter also ensuring good looking, "clean" bales which are very stable when being handled;
- the balers are of relatively simple design; and
- the balers normally have no difficulty in forming a bale core (which sometimes can be a problem with hard core balers when handling short lengths of crop material).

It is an object of the present invention to provide a round baler which affords some of the advantages of both a hard core baler and a soft core baler.

One of the problems with achieving this objective is that the baleforming elements have to be both expandable, to give effect to the high flexibility characteristics of the core forming, and yet exert a relatively large force on the bale at completion thereof to produce the hard outer shell. In the case of round balers such as illustrated in EP-A-35.114 and employing expandable bale-forming members in the form of endless flexible members, such as chains or belts, these flexible members are usually tensioned by spring means and irrespective of the tension produced, thereby, these flexible members will still be capable of flexing to some extent because they are not positively supported on major portions of their length. Thus, there is a limit to the pressure which is exertable by these flexible members to produce the outer shell of the bale. This is why, prior to the present invention, sufficiently hard shells have only been achieved by the fixed bale-forming members of soft core balers.

According to the present invention there is provided a round baler for forming cylindrical bales of crop material which comprises:

- bale-forming means arranged to define a bale chamber which is expandable from an initial shape to a generally cylindrical final shape; said bale-forming means including at least one endless flexible member having an inner operative run and an outer run extending at opposite sides between a pair of spaced apart, fixedly positioned rotatable guide members, and
- at least one tensioning means movably mounted within the envelope defined by the opposed runs of the at least one flexible member and resiliently engaging the outer run thereof for tensioning said at least one flexible member; said at least one tensioning means permitting, by engagment on the outer run the inner run to expand outwardly under tension between said guide members to extend along a curved path around at least a portion of the circumference of a bale during the formation thereof in said bale chamber and said expansion of the inner run being compensated by a corresponding shortening of the outer run resulting in a displacement of said tensioning means in the direction towards the inner run and opposite to the resilient force exerted thereby and which is characterized in that during an initial stage of the bale formation, the inner run expands until it is engaged by the at least one tensioning means whereafter, during a final stage of the bale formation and as further crop material is fed into the bale chamber, further inward movement of said tensioning means and expansion of the inner run are prevented whereby said flexible member, during this final stage, is movable along a fixedly positioned path for forming a hard outer layer on the bale being formed.

Preferably, the bale chamber is defined by two endless flexible members of which at least one is expandable up to a maximum expansion at which said flexible member is movable along a fixedly positioned path. Conveniently the or each expandable member comprises a pair of spaced endless chains interconnected by a plurality of slats extending transversely of the machine.

When two expandable members are provided, one such member may be tensioned by tensioning means comprising at least one arm pivotably mounted intermediate its ends on the machine and carrying at respective ends rotatable members around which the expandable member passes, the arm being urged about its pivot by a torsion spring acting between a stop on the arm and a stop on the machine, whereby the expandable member is tensioned. The pivot of each arm may be offset from the centre thereof. The other expandable member may be tensioned by tensioning means comprising at least one upper and one lower tensioning device each in the form of a T-shaped member with the crosspiece thereof carrying a rotatable member at each end and the stem thereof being pivotally mounted on one end of a support arm pivotally attached to the machine. A tension spring is advantageously connected between each said stem and the machine. Each said tension spring is operable to pivot the corresponding T-shaped support such that only one rotatable member thereof is in engagement with only the outer run of the expandable member when the machine is empty. Each said tension spring further also permits the corresponding T-shaped support to pivot in the opposite direction until both rotatable members thereof engage both the outer run and the inner run of the expandable member when a bale is being formed in the bale chamber and is nearing its maximum size.

Round balers in accordance with the present invention will now be described in greater detail, by way of example, with reference to the accompanying drawings, in which:

Figure 1 is a schematic side view showing the machine empty,

Figure 2 is a view similar to that of Figure 1 but showing the machine with a completed bale therein,

Figure 3 is an enlarged view of a component of Figure 1,

Figure 4 is a partial sectional view on the line IV - IV of Figure 3,

Figure 5 is an enlarged view of another portion of Figure 1,

Figure 6 is an enlarged view of an alternative component for the baler according to Figure 1,

Figures 7 and 8 are views similar to those of Figures 1 and 2 but showing a second embodiment, and

Figures 9 and 10 are views similar to that of Figure 2 but showing third and fourth embodiments, respectively.

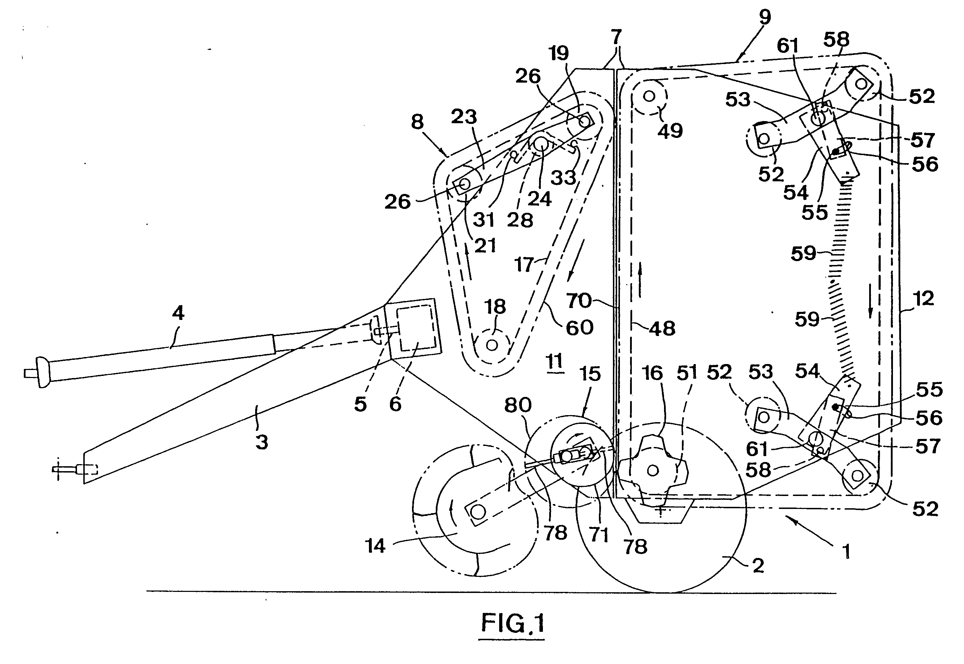

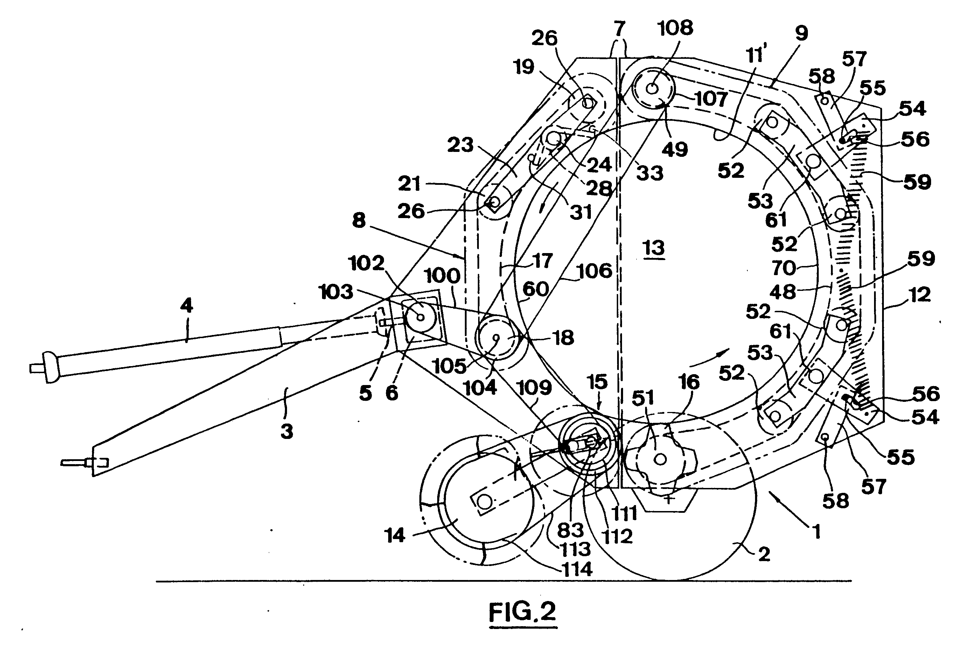

Referring first to Figures 1 and 2, the machine shown therein is in the form of a pull-type round baler comprising a base frame 1 carrying a pair of ground-engaging wheels 2 and having attached thereto a drawbar 3 for connection to a tractor (not shown) or other towing vehicle. A drive shaft 4 extends above the drawbar 3 and is connected at one end to an input shaft 5 of a gearbox 6, and is connectable at the other end to a power-take-off shaft (also not shown) of the towing vehicle. Side walls 7 of the machine are attached to the base frame 1 and partially define a bale forming chamber by way of providing the sides therefor. The front and rear of the bale forming chamber are defined by portions of respective expandable members 8 and 9 which, when the machine is empty (Figure 1), form together with the side walls 7 a generally vertically oriented, wedge-shaped (as seen in side view) start chamber 11, and which expand on the formation of a bale to form a cylindrical bale chamber 11' (Figure 2). Each side wall 7 is split, with the expandable member 8 forming, in conjunction with one portion of each side wall 7, a front portion of the bale chamber and with the expandable member 9 forming, in conjunction with the other portion of each side wall 7, a rear portion of the bale chamber.

As seen in Figures 1 and 2, the rear portion of the bale chamber is larger than the front portion and in fact forms a tailgate 12 for the machine which is pivotable upwardly in order to effect discharge of a completed bale 13 (Figure 2) from the machine. With this differential sizing of the two portions of the bale chamber, the centre of gravity of a completed bale lies within the rear portion of the bale chamber, whereby there is a natural tendency for a completed bale to roll from the machine once the tailgate 12 has been raised, which tendency greatly facilitates bale discharge.

Pivotally mounted at the front of the machine is a conventional crop pick-up unit 14 which, in use, picks up crop material from the ground and delivers it to a combined crop feeder and bale support device 15 located at the mouth of the bale start chamber 11. Located within the rear portion of the bale chamber and disposed at the front bottom corner of the tailgate 12 and adjacent the feeder and support device 15 is a rotor 16 which extends across the full width of the bale chamber, i.e. extends between the side walls 7. The rotor 16 also serves to support a bale during its formation.

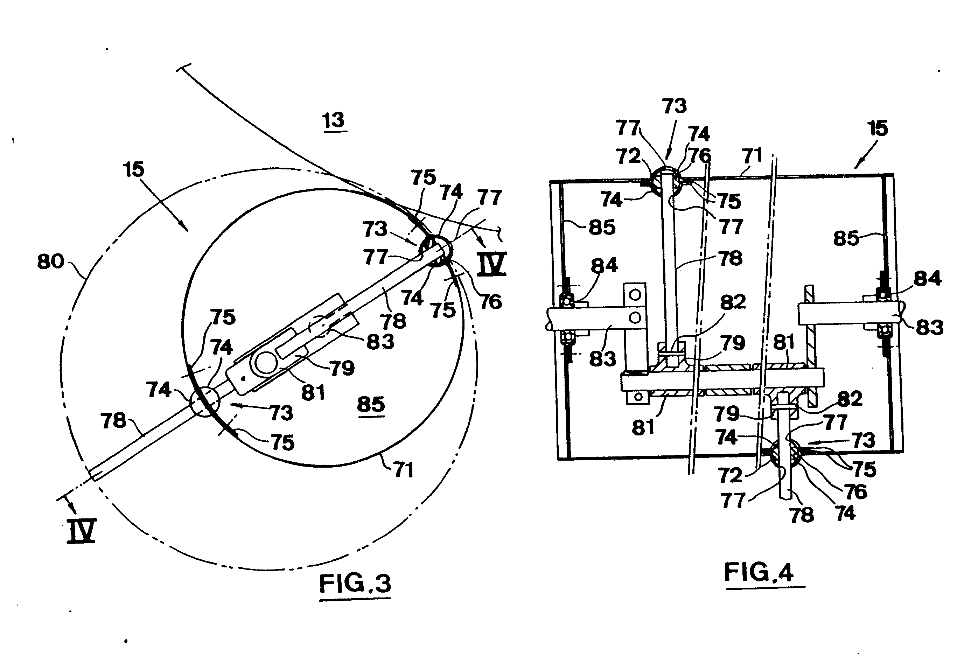

Having described the overall machine in general, certain components will now be described in greater detail with reference to Figures 3 to 6, in addition to Figures 1 and 2, of the drawings. Looking first at the expandable member 8 partially defining the front portion of the chamber, this member 8 comprises two transversely spaced apart endless chains 17 each extending around a driven sprocket 18, an idler sprocket 19 and a nontoothed guide roller 21 disposed at respective apices of a triangle, as seen in side view in Figure 1. The chains 17 are disposed towards, but inset from respective opposite sides of the machine and are interconnected by a plurality of slats (not shown) which extend transversely of the machine, with each end of each slat extending past the associated chain and terminating just short of the side walls 7. The slats of the expandable member 8 may be similar or identical to the slats 22 of the rear expandable member 9 still to be described hereinafter.

The sprocket 19 and guide roller 21 associated with each chain 17 are mounted for rotation on an arm 23 which in turn is pivotally mounted on the frame via a pivot shaft 24 (common to both arms 23) offset from the centre of the arm. The pivot shaft 24 has, at each end, a first portion around which is disposed a torsion spring 28, and a second portion which is received in bearing means mounted on the associated side wall 7. Each spring 28 serves to bias the associated arm 23 in a clockwise direction as seen in Figure 1 and 2, whereby tension in the chain 17 is maintained and any slack resulting from wear is automatically taken up. This tensioning of each chain 17 is achieved by locating one end of each spring 28 against a stop 31 fixed to the related arm 23, and locating the other end against a stop 33 fixed to the associated side wall 7.

It will be noted that, as a bale is being formed in the bale chamber, the arms 23 pivot anticlockwise, as seen in Figures 1 and 2, until the guide rollers 21 engage the opposed runs of the endless chains 17 forming part of the expandable member 8. At this moment, further pivoting of the arms 23 in the anticlockwise direction, and hence further "expansion" of the expandable member 8, becomes impossible, whereby the inner run of the expandable member 8 assumes a virtually fixed position which is very much the same as the fixed position assumed by the bale forming members in a so-called soft core baler or a baler with a fixed bale chamber.

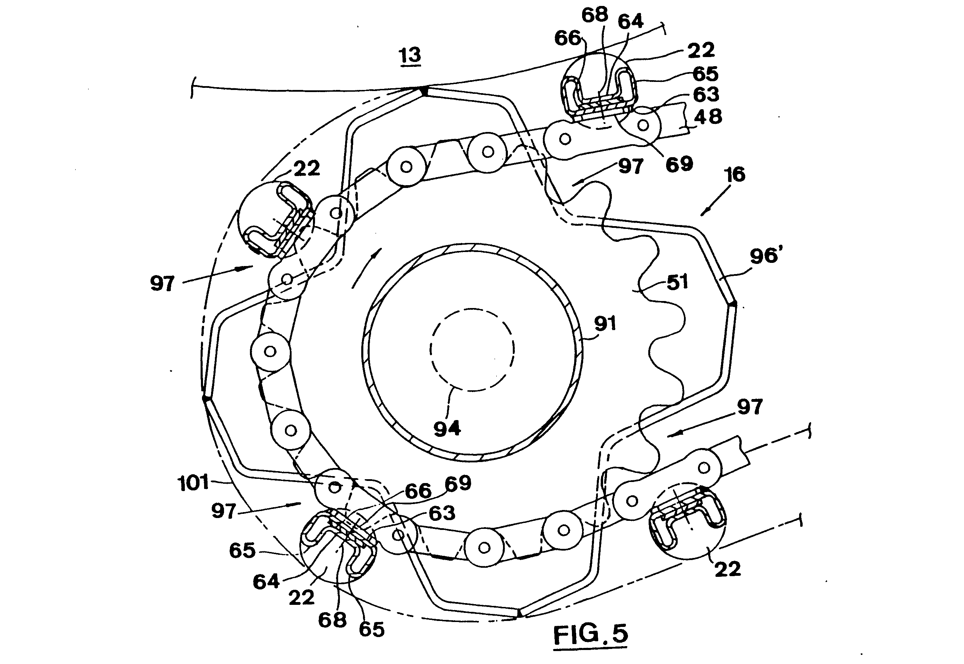

Turning now to the expandable member 9, this also comprises a pair of spaced endless chains 48 located adjacent, but inset from, the respective side walls 7 and interconnected by a plurality of slats 22 (Figure 5). Again, the slats 22 extend beyond the chains 48 and terminate just short of the side walls 7. Each chain 48 extends around an upper fixed sprocket 49, a lower fixed sprocket 51 associated with the rotor 16, and one or both movable guide rollers 52 of each of an upper and lower pair thereof. When the machine is empty (Figure 1), only one roller 52 of each pair is in engagement with the associated chain 48, but when a bale nears completion, both rollers of each pair are in engagement with said associated chain 48. Also, under this condition i.e. when a bale nears completion in the bale chamber 11', both the inner and outer runs (as seen with respect to the bale chamber) of the chains 48 engage the associated rollers 52. The rollers 52 of each pair are rotatably mounted on respective ends of a crosspiece 53 of a generally T-shaped support, the stem 54 of which is provided with a pivot 55 intermediate its ends. Each pivot 55 extends from the stem 54 through an arcuate slot 56 in the associated side wall 7 and is attached to a support arm 57 pivotally mounted at 58 on said side wall 7 at the centre of curvature of the slot 56. The end of each stem 54 of the T-shaped support remote from the crosspiece 53 is connected to one end of a tension spring 59, the other end of which is attached to the associated side wall 7. The two upper crosspieces 53 and the two lower crosspieces 53 are interconnected by respective transverse tubular beams 61 to ensure that the two upper and two lower supports pivot in unison. The springs 59 serve in the empty condition of the baler, to bias the upper T-shaped supports in a clockwise direction, and the lower supports in an anti-clockwise direction, as viewed in Figure 1, whereby one roller 52 of each pair engages the associated chain 48 to maintain tension therein and again take up any slack in that chain resulting from wear. Also, the support arms 57 are pivoted in a direction towards the bale start chamber 11 until the pivot pins 55 engage the forward ends of the arcuate slots 56, under the action of the springs 59. It will also be noted that in this empty condition the rear expandable member 9 assumes a generally rectangular configuration with the run 70 facing the bale start chamber 11 being oriented generally vertically.

As a bale is being formed in the bale chamber 11', the forward run 70 is moved in a rearward direction against the force of the springs 59 and inbetween the top and bottom sprockets 49 and 51, respectively. As the bale nears completion, both guide rollers 52 of each pair of guide rollers first engage the rear runs of the respective chains 48 and ultimately, the forward runs 70 of the chains 48 engage the "opposite sides" of the guide rollers 52. Any "stretching" of the chains 48 resulting from wear is compensated by the T-shaped supports 53, 54 with the guide rollers 52 thereon moving generally radially outwardly, as seen with respect to the completed bale 13 in the bale chamber 11'. Such radially outward movement is made possible by the provision of the support arms 57 carrying the T-shaped supports being mounted for pivotal movement about the pivots 58, whereby the pivot pins 55 extending through the elongate slots 56 are moved away from the inner ends thereof.

It will be appreciated that, like the forward expandable member 8, the rear expandable member 9 also cannot expand any further once both runs of the chains 48 engage the "opposite sides" of the guide rollers 52. Thus, again in this condition, the expandable member 9 also acts as the fixed bale forming means of a so-called soft core round baler.

It will also be appreciated that, as a result of the guide rollers 21, 52 engaging at times the opposed runs of the respective associated chains 17, 48, these guide rollers 21, 52 need to have smooth outer surfaces, as toothed outer surfaces (such as those of sprockets) would interfere with the proper simultaneous guidance of both runs of the chains.

Turning now to the combined crop feeder and bale support device 15, and referring to Figures 3 and 4, this comprises a hollow rotor 71 having a smooth outer surface and provided with two diametrically opposed rows of apertures 72 each of which receives an insert 73 from within the rotor, the inserts being bolted to the rotor. Each insert 73 comprises two hemispherical shells 74 formed with flanges 75 by which the insert is bolted to the rotor 72, the sphere formed by the two shells containing a bush 76 of elastomeric synthetic plastics material. Each shell 74 is apertured to provide a through aperture 77 for a rod or finger 78 mounted in a radial extension 79 of a bush 81 of an elastomeric synthetic plastics material. Each rod 78 is retained in the extension 79 by a pin 82, and each bush 81 is rotatably mounted on a stationary crankshaft 83 the ends of which are received in bearings 84 provided in end plates 85 of the rotor 71. The rotor body is driven and rotates around the crankshaft 83, whereby the rods 78 are alternately extended (at the side of the rotor adjacent the pick-up unit 14) and retracted (at the side of the rotor adjacent the other rotor 16) by way of sliding in and out of the apertures 77 and bushes 76, the ends of the rods describing the circle indicated at 80.

The combined crop feeder and bale support device 15, together with the facing runs 60, 70 of the expandable member 8, 9 when in the empty condition of the baler define the generally triangular and upright bale starting chamber 11 with the device 15 being provided at a distance beneath the lower end of the member 8, thus providing therebetween a bale chamber inlet opening. The device 15 is further mounted proximate, and forwardly of the rotor 16 so that, in the empty condition of the baler, the generally vertical run 70 of the rear bale forming member 9 is offset to the rear of the device 15, which in part forms the base of the triangular bale starting chamber 11.

The device 15 is further also positioned relative to the lower sprockets 18 of the front bale forming member 8 and the rotor 16 (which is part of the rear bale forming member 9) so that, as a bale is nearing completion within the bale chamber, the bale is supported at least in part by the cylindrical body 71 of the device 15. Hence the cylindrical body 71 is positioned, together with other components on a circumference defining the cylindrical bale chamber 11' when at its maximum diameter.

However, the device 15 is also positioned relative to the bale chamber 11' so that, as a bale is being formed in the bale chamber and is nearing completion, its centre of gravity is moved from generally above the device 15 to the side thereof opposite to the side facing the pick-up device 14.

The retractable fingers 78 are substantially in the retracted position at the point on the cylindrical body 71 of the device 15 where, when a bale is being completed in the bale chamber 11', the bale is supported on the cylindrical body, thereby avoiding the fingers penetrating into the bale and adversely affecting the surface thereof. The fingers 78 are extended to the maximum at the side of the cylindrical body 71, facing the discharge end of the pick-up device 14 in order to take over crop material therefrom and are retracted gradually from the maximum extension position to said point of contact of the bale on the cylindrical body 71, as the device is rotated.

Referring to Figure 5, the rotor 16 will now be described. The function of the rotor 16 is to provide a positive support for a bale during formation, which support does not impart any substantial vibration to the bale which might impair the formation thereof and/or cause unacceptable wear and/or damage to the machine. As already described, the chains 48 extend around sprockets 51 associated with the rotor 16 and if the rotor were not provided, the slats 22 would continuously pass beneath the bale being formed, thereby raising the bale on each occasion and thus subjecting the bale to vibration in the generally vertical plane. The rotor 16 overcomes this problem by providing pockets for the slats 22 to enter as they pass beneath the bale, whereby the rotor, together with the slats received in the pockets thereof, provide a substantially smooth or continuous surface on which the bale is supported.

The rotor 16 consists of three major portions which are transversely spaced apart and inbetween which the sprockets 51 are provided to which reference has already been made. All three of said rotor portions are substantially identical in shape when seen in end view. The outer surfaces 96' of said rotor portions are generally star-shaped in cross-section thus providing four longitudinally extending pockets 97 for the reception of the slats 22 associated with the chains 48 and as can be seen in Figure 5. The surfaces 96' are each formed from four identical sections of sheet metal welded together at the "points" of the star.

As the rotor 16 rotates, the slats 22 move into the pockets 97 as the chains 48 pass around the sprockets 51, whereby a substantially continuous support surface is seen by the bale 13 being formed as presented at any given instant by a slat and a "point" of the star-shaped rotor. In this respect, it will be seen from Figure 5 that, when a slat 22 is received in a pocket 97, the radially outer portion of the main body of the slat is located at the circle 101 circumscribed by the "points" of the rotor 16.

From the drawings, and more especially from Figure 2, it will be appreciated that only part of the weight of a bale being formed in the bale chamber is supported on the rotor 16 (and on a slat 22 received in a pocket 97 thereof and on the chains 48), another part of the bale weight being supported, as already mentioned, by the combined feeder and bale supporting device 15.

It should be noted that the number of teeth on each sprocket 51 is N times the number of links in the chains 48 between adjacent slats 22, where N is an integer, although preferably not one. Also, the number of teeth on each sprocket 51 is a multiple of the number of pockets provided in the rotor. It will be seen from Figure 5 that in the embodiment illustrated therein, each sprocket has sixteen teeth which is a multiple of the four pockets 97 and which makes N=4 since a slat 22 is attached to every fourth link of the chains 48.

The drives for the various driven components of the baler are shown in Figure 2 of the drawings, these being omitted from Figure 1 for clarity. A sprocket 102 on the output shaft 103 of the gearbox 6 drives, via a chain 100, one sprocket of a triple sprocket 104 on a shaft 105 on which the sprocket 18 of the front expandable member 8 is mounted, whereby the chains 17 are driven in a clockwise direction as seen in Figures 1 and 2. Both chains 17 are driven since the shaft 105 is common to both sprockets 18. A further chain 106 extends around a second sprocket of the triple sprocket 104 and around a sprocket 107 on a common shaft 108 for the two sprockets 49 of the rear expandable member 9, whereby the two chains 48 are also driven in a clockwise direction as seen in Figures 1 and 2. Thus the runs 60 and 70 of the chains 17 and 48 partially defining the start chamber 11 move in opposite directions so as to impart a rolling motion to the crop material fed to the start chamber.

A chain 109 extends around the third sprocket of the triple sprocket 104 and around a sprocket 111 provided on one end of the cylindrical body 71 of the rotor 15, whereby the latter is driven in a clockwise direction as seen in Figures 1 and 2. A pulley 112 is also coupled to the sprocket 111 and a belt 113 extends from that pulley to a pulley 114 on the pick-up unit 14 so as to drive the latter also in a clockwise direction as seen in Figures 1 and 2. Thus it is seen that the drives to the driven components are effected in a simple manner.

In operation of the embodiment of Figure 1 to 5, the machine is hitched to the tractor or other towing vehicle via the drawbar 3, and the driveshaft 4 connected to the tractor PTO, whereby the chains 17, 48, the rotor 15 and the pick-up 14 are driven as described above. Thus as the machine is towed across a field of previously cut crop material, the latter is picked up by the pick-up 14 and conveyed overtop and rearwardly towards the rotor 15. The extended fingers or rods 78 of the latter take over the crop material and feed it into the mouth of the start chamber 11 against the rising run 70 of the chains 48 and associated slats 22, the fingers 78 then retracting and thus releasing the crop material. It will be appreciated from the foregoing description that the slats 22 are relatively closely spaced, and they serve to carry the crop material a certain way into the start chamber 11 before the crop tumbles under gravity and falls downwardly, assisted by the generally downwardly moving slats 22 of the front expandable member 8. The relatively gentle tumbling action of the crop material results in a generally soft core for the bale being formed. However, the rolling action imparted to the crop material by the rotor 15, and the slats 22 on the facing runs of the chains 17 and 48 results in a smaller core than would otherwise pertain in a conventional soft core baler. Experience has shown that the core usually starts to roll at a distance above the combined feeder and support device 15 and inbetween the facing runs 60, 70 of the bale forming members 8, 9. As the size of the bale core increases, the start chamber 11 becomes full, whereupon the core presses increasingly harder on the slats 22 of the facing runs of the chains 17 and 48 with the result that said runs of the chains 17 are urged to the left as seen in Figure 1, and said runs of the chains 48 are urged to the right, the former against the action of the springs 28 and the latter against the action of the springs 59. Accordingly, the layers of crop material surrounding the soft core begin to be more consolidated, the density of the bale in fact increasing to the outer shell thereof since the springs 28 and 59 progressively increase the tension in the chains 17 and 48.

It will be appreciated that the degree of compaction depends on the forces exerted by the springs 28 and 59. With the illustrated arrangement it is easy and convenient to vary these spring forces and thus vary the density of the bale. Therefore, if it is desired to produce soft core bales pretty much as are conventionally produced with conventional soft core balers, it is sufficient to adjust the springs 28 and 59 accordingly.

It should be noted that as the runs 60, 70 of the bale forming members 8, 9 are deflected as the bale increases in size, the facing runs of the chains 17 and 48, together with the associated slats 22, form complementary portions of a cylinder as seen in Figure 2 to give rise to the cylindrical bale chamber 11'. As already mentioned, this deflection is accompanied by pivotal movement of the arms 23 and the T-shaped supports 53, 54 to the positions indicated in Figure 2. It should also be noted that the arms 23 are pivoted off centre in order to minimize the relative movements between the sprockets 19 and the sprockets 49 so as not to create any sizeable gap therebetween through which crop material may be lost.

When the arms 23 and supports 53, 54 are in the positions of Figure 2, the chains 17 are in contact with opposite "sides", as it were, of the sprockets 18 and 19 and the rollers 21, whereby the chains are positively supported in fixed positions with no slack therein. Likewise the chains 48 are positively supported in fixed positions by the sprockets 49, 51 and the rollers 52. Thus when the bale size of Figure 2 is reached the slats 22 are moved along a fixed path around the bale being completed. As further crop material is still being fed into the bale chamber 11' and as the bale chamber cannot expand further a hard shell or outer layer is formed on the bale with compaction taking place in an inward direction from the outside. The hardness of this outer shell, and hence its weathering characteristics, depend on the amount of crop material fed into the bale chamber after the bale has reached its maximum diameter. This is comparable to the hard shell which can be produced with conventional soft core balers and is totally independant of the initial setting of the springs 28, 59.

As the bale is nearing completion in the bale chamber 11', it is supported in part on the cylindrical body 71 of the device 15 and on the rotor 16, together with the slats 22 of the rear bale forming member 9 as they pass in the successive pockets 97 of the rotor. This occurs without any undue vibration of the bale in the bale chamber and hence also of the baler. It will also be appreciated, mainly from Figure 2, that the forward bale forming member 8, together with the sprockets 18, and the rearward bale forming member 9, together with the lower pairs of guide rollers 52 on the T-shaped support members 53, 54, assist in supporting the weight of the bale in the bale chamber.

When the bale 13 has been completed, the tailgate 12 is raised (by means not shown) above the axis 108 of the sprockets 49 and since the centre of gravity of the bale 13 lies within the rear portion of the bale chamber 11', there is a natural tendency for it to roll from the machine on the raising of the tailgate. This tendency is augmented by the action of the rotor 15, which continues to be driven, and thus positive discharge of a completed bale is achieved.

As soon as a completed bale 13 is discharged from the machine, the springs 28 and 59 return the arms 23 and supports 53, 54, respectively, to the positions of Figure 1, whereby the tapered start chamber 11 is re-formed ready for forming the next bale. It will be appreciated that the machine is capable of forming bales of less than the maximum diameter as bale discharge can be effected at any time by raising the tailgate 12. Whilst any bale less than the maximum size will not have the heavily compacted outer layer or shell, the latter nevertheless will be such that the bale will hold together especially when the springs 28, 59 have been set to give an increased density to the bale being formed.

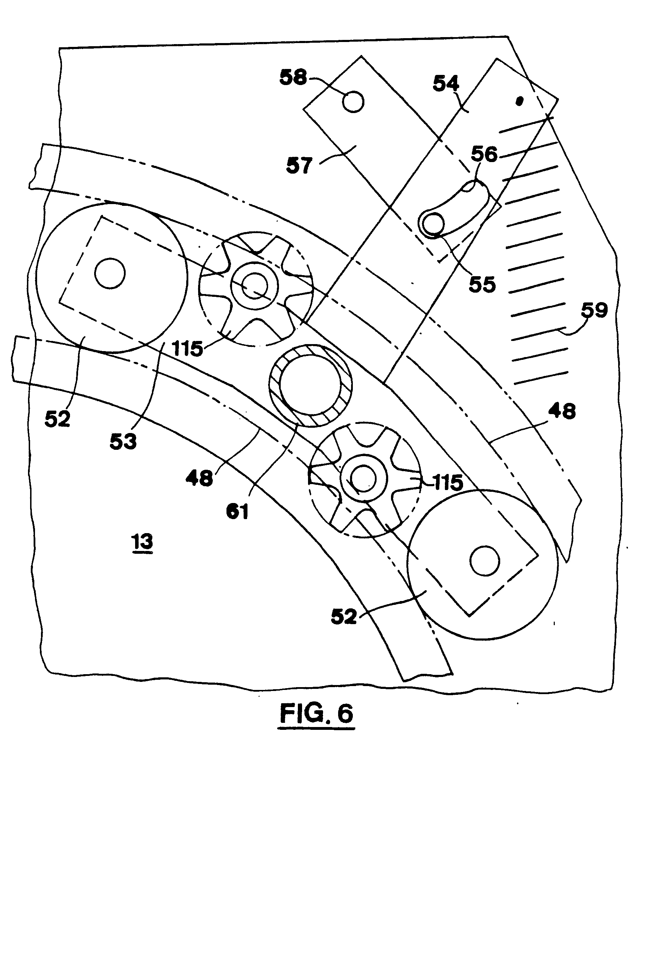

Turning now to Figure 6, this shows a modified arrangement of the guide means for guiding the chains 48 when a bale has reached it maximum diameter in the bale chamber 11'. Figure 6 shows one T-shaped support 53, 54 in the position adopted when a completed bale has been formed. In this arrangement, each support 53, 54 is provided with two sprockets 115, one in engagement with the front run of the associated chain at a location proximate to one guide roller 52 and the other in engagement with the rear run, again at a location proximate to the other guide roller 52. As before, the chains 48 engage both "sides" of the rollers 52 when in the position (bale complete) of Figure 6. This arrangement improves the guidance of both runs of the chains 48 on the guide rollers 52 when a bale has reached its maximum size within the bale chamber 11' by positively holding the chains 48 in alignment with the rollers 52.

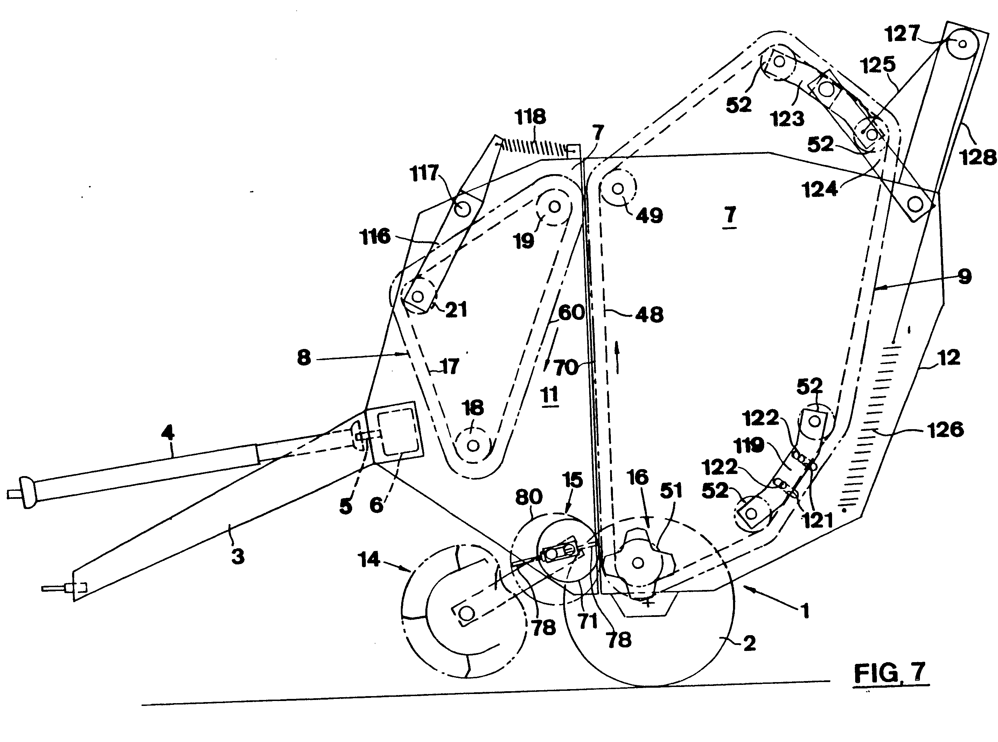

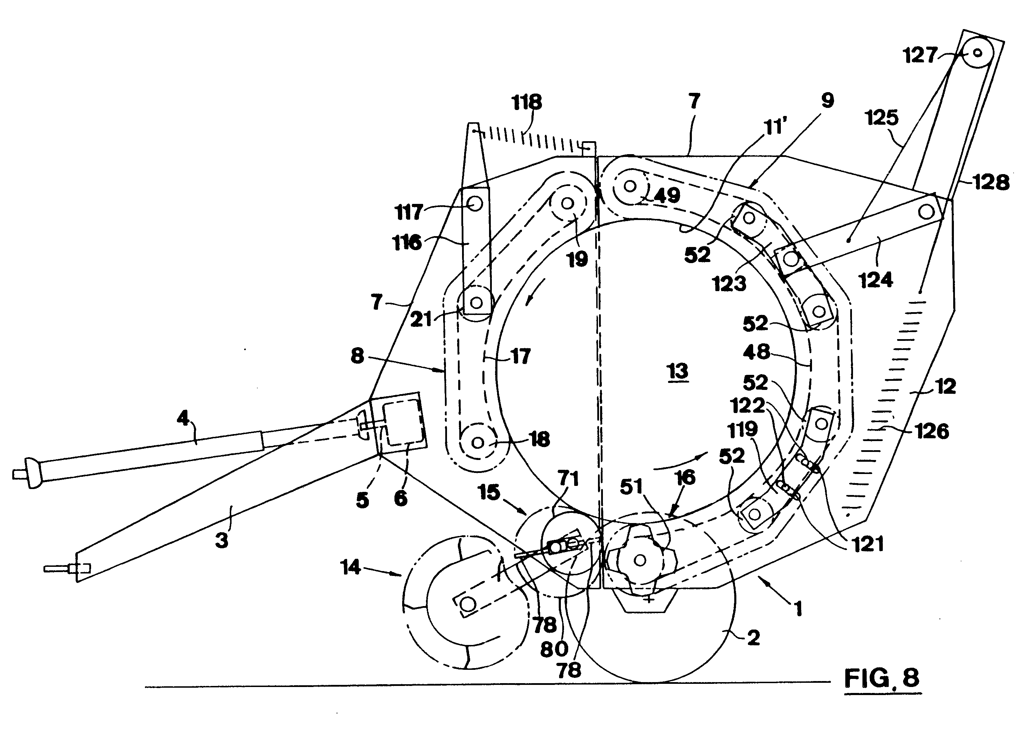

Figures 7 and 8 show an alternative embodiment of round baler which, in the main, is similar to that of Figures 1 to 5; the differences being in respect of the chain tensioning devices associated with the front and rear expandable members 8 and 9. In this embodiment the arms 23 are replaced by arms 116 which carry at one end the guide rollers 21, with the sprockets 18 and 19 being fixed. Each arm 116 is pivoted intermediate its ends on a pivot 117, with the other end of the arm connected to one end of a tension spring 118 attached at its other end to the machine frame. With this arrangement, the gaps between the sprockets 19 of the front expandable member 8 and the sprockets 19 of the rear expandable member 9 remain constant and small so that the likelihood of any loss of crop material therethrough is small. In the embodiment of Figures 1 to 5, the sprockets 19 are movable relative to the sprockets 49 as a bale being formed increases in size so that care has to be taken with the disposition and mounting of the sprockets 19 with the crop loss problem in mind, as already explained.

As regards the rear expandable member 9, tension in the chains 48 is maintained only by the upper member and not the upper and lower members (supports 53, 54) as in the first embodiment. The lower supports 53, 54 are replaced by arms 119 which carry the guide rollers 52; said lower arms 119 being mounted for limited movement relative to the side walls 7 by virtue of a pair of elongated slots 121 formed in the side walls which slidably receive mounting pins 122 attached to the associated arms 119. This particular mounting, like the provision of the pivot arms 57 in the embodiment of Figures 1 to 5, provides compensation for any "stretching" of the chains 48 as a result of wear. The upper supports 53, 54 are replaced by arms 123 which carry the rollers 52 and are each centrally pivoted on one end of a further arm 124 which is pivoted at its other end to the machine frame. One end of a cable 125 is attached to each arm 124 intermediate its ends, the other end of the cable being secured to one end of a tension spring 126 which in turn has its other end attached to the machine frame, the cable passing over a pulley 127 on an extension 128 on the frame. Thus as the bale forming member 9 gets deflected as the bale grows (as already described with respect to the first embodiment), each arm 124 is pulled anticlockwise about its pivot and takes with it the cable 125 which therefore stretches the spring 126 associated therewith, thereby increasing the tension in the chains. Similarly, the springs 118 increase the tension in the chains 17 as the arms 116 are pivoted anticlockwise and stretch the springs 118. It will be noted that, unlike in the embodiment of Figure 1 to 5, both guide rollers 52 of each pair of guide rollers engage one run of the respective chains 48, when the baler is empty. In all other respects, the operation of the embodiment of Figures 7 and 8 is similar to that described for the embodiment of Figures 1 to 5.

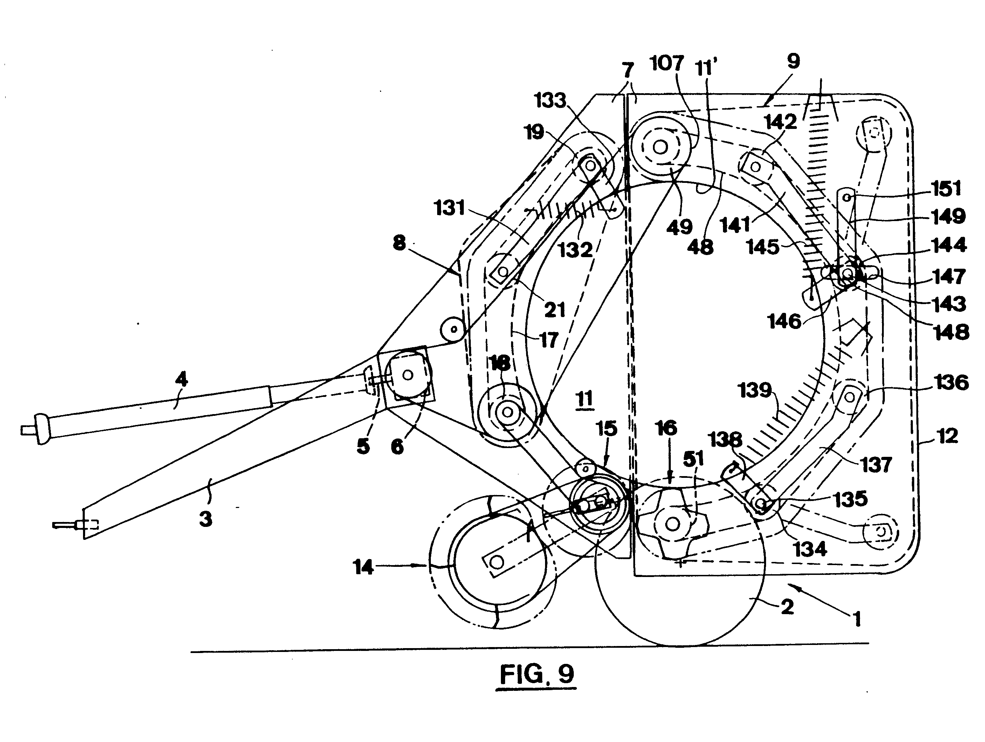

Turning now to Figure 9, this shows a still further embodiment in which again the differences with respect to the embodiment of Figures 1 to 5 are concerned with the chain tensioning devices associated with the front and rear expandable members 8 and 9, the machine otherwise being similar to the first described embodiment. The chain tensioning devices of the embodiment of Figure 9 have been simplified with respect to those described hereinbefore and associated with the front expandable member 8. The tensioning devices each comprise an arm 131 pivotally mounted at one end on the shaft of the sprocket 19 which is fixed as in the embodiment of Figures 7 and 8. The other end of the arm carries the guide roller 21 which is urged into contact with the outer run of the chain 17 by a spring 132 acting between the base frame 1 and one end of an arm 133 attached to the arm 131, these two arms in fact forming a cranked lever pivoted, as already mentioned, about the shaft of the sprocket 19.

In the embodiments of Figures 7, 8 and 9 the fixing of the sprockets 19 is an important feature in that these sprockets can be set with respect to the adjacent respective sprockets 49 of the rear expandable means 9 such that there is little or no gap therebetween through which crop material can be carried by the relatively aggressive rear expandable means 9.

As regards the chain tensioning devices associated with the rear expandable member, each comprises an upper and lower device as before with the principal difference being that one of the two rollers of the upper and lower devices is essentially fixed. Looking first at the lower devices, each comprises a fixed roller 134 mounted on a common shaft 135 extending the full width of the machine, and a movable roller 136 rotatably mounted on one end of an arm 137 which is pivotally mounted at its other end on the shaft 135. Each arm 137 is slightly cranked and has attached to it a further arm 138 (these two arms forming an overall cranked lever), the arm 138 being urged clockwise as seen in Figure 9 by a spring 139 acting between this arm and the base frame of the machine. In the empty condition of the machine, the springs 139 urge the arms 137 and the rollers 136 to the broken line position of Figure 9, these components progressively moving to the full line position as a bale is formed.

Each upper chain tensioning device is similar to the lower devices in that slightly cranked arms 141 carry movable rollers 142 at one end and are pivotally mounted at the other end on a common shaft 143 on which are rotatably mounted other rollers 144. The arms 141 are urged in a clockwise direction (as seen in Figure 9) by springs 145 acting between further arms 146 and the base frame 1, the respective two arms 141 and 146 being connected to one another and again forming overall crank levers. However, the rollers 144 are not rigidly mounted unlike the rollers 134 because expansion of the chains 48 has to be accommodated; this expansion occurring due to wearing of the links which results in chain stretch. The common shaft 143 on which the rollers 144 of the two upper chain tensioning devices are mounted, extends through slots 147 in the sidewalls 7 of the machine and is supported at each end in a bearing block 148 which is carried on one end of a support link 149 which is pivotally attached at 151 to the exterior of the related sidewalls, the slots merely allowing arcuate movement of said shaft about the pivots 151 when such movement occurs due to chain stretch and under the action of the springs 145.

The provision of substantially fixed rollers 144 in the upper devices and the fixed rollers 134 in the lower devices is advantageous in that they are permanently located at the periphery of a bale of maximum diameter, whereby they assist more positively in the compaction of the outer bale layer to form the desired hard shell. Furthermore, the fixed rollers 134 also serve to support a bale during formation, in conjunction with the rotor 16. With the previously described embodiments in which only the rotor 16 provided bale support, there is a tendency for a bale to tilt or roll rearwardly since its centre of gravity is rearward of the rotor 16. With the provision of the fixed rollers 134 (which are reasonably closely spaced with respect to the rotor 16, but not too closely spaced), this tendency for a bale to become offset from the centre of the bale chamber is obviated.

It will also be seen that the springs 145 of the upper chain tensioning devices provide a component of force rearwardly of the machine which ensures the taking up of chain stretch.

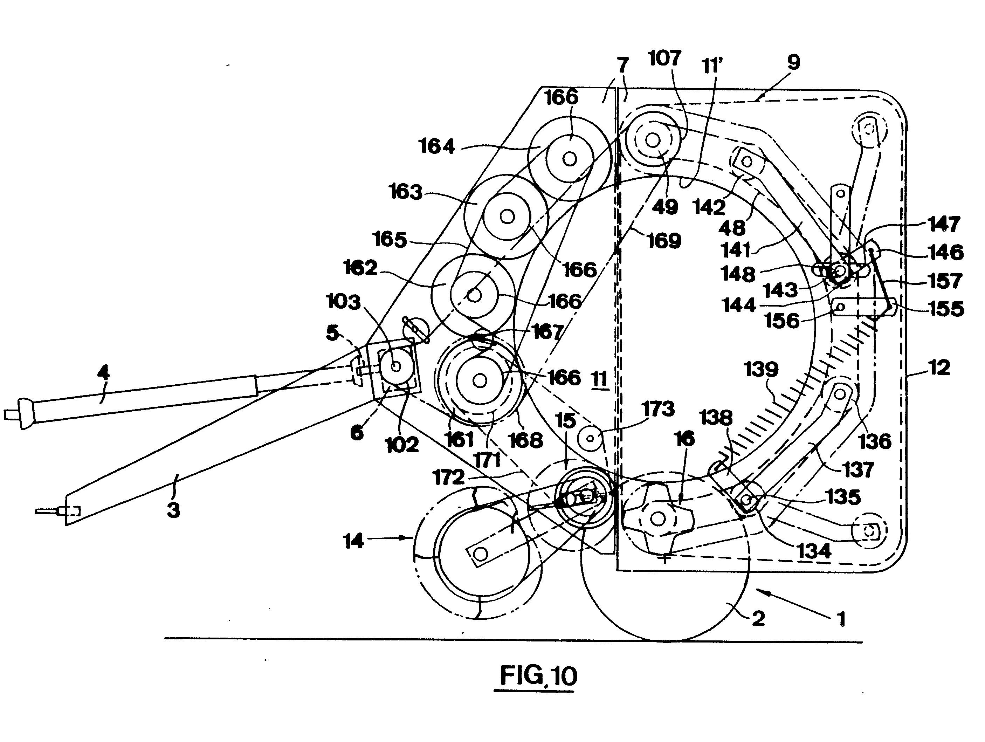

Turning now to the still further embodiment of Figure 10, the basic machine is again similar to that of the previous embodiments but in this case the front expandable means 8 have been replaced by a fixed roller arrangement, and the chain tensioning devices of the rear expandable means 9, whilst being similar to those of the embodiment Figure 9, have been further simplified. Looking at the chain tensioning devices first, the lower devices are identical to those of Figure 9 except that the springs 139 act between the respective arms 138 and the ends of links 155 pivotally mounted at the other ends on the base frame 1 at 156.

The upper devices are also identical to those of the embodiment of Figure 9 as far as the arms 141, shaft 143 and rollers 142 and 144 are concerned. However, the further arms 146 have been turned through 180 degrees and instead of being attached to the springs 145 they are connected by respective pull rods 157 to the links 155, whereby the springs 139 are common to both the upper and lower tensioning devices. The pull rods 157 serve to ensure that a component of the spring forces acting on the rollers 142 is directed generally rearwardly of the machine so that the rollers 144 and shaft 143 are always urged in the correct direction to take up any chain slack due to wear.

The arrangement of the springs 139, arms 138, 146 and links 155 is such that a greater force is exerted on the rollers 142 of the upper devices than on the rollers 136 of the lower devices because the upper rollers have to support part of the weight of the chains unlike the lower rollers, and also such that the upper and lower devices move progressively and in unison to the completed bale position in order to avoid irregularity in the bale shape during formation. These requirements are also met in the other embodiments.

As regards the front bale forming means this is, as already mentioned, in the form of a fixed roller arrangement, more specifically in the form of a set of four rollers 161, 162, 163 and 164 each of which is driven although the centre rollers 162 and 163 could be freely rotatable if desired. The rollers 161, 162, 163 and 164 are disposed such that they are disposed around part of the periphery of a maximum sized bale. Thus when such a bale has been formed, the addition of a little further crop material causes the bale to press on the rollers which thus compact the outer layer of crop material to help produce the hard outer shell.

The rollers 161 to 164 extend across the width of the machine and are mounted in bearings supported on the base frame 1. Each roller 161 to 164 has a smooth exterior surface and is driven in a clockwise direction (as seen in Figure 10) by a chain 165 which engages sprockets 166 on the rollers and also passes around an idler sprocket 167. The lower roller 161 has a further sprocket 168 engaged by a chain 169 which also engages the sprocket 107 of the rear bale forming means and the sprocket 102 on the output shaft 103 of the gearbox 6, and has a still further sprocket 171 engaged by a chain 172 which drives the combined crop feeder and bale support device 15 via an idler 173. The device 15 drives the pick-up 14 as before via a belt a pulley arrangement.

The fixed roller arrangement for the front bale forming means affords two advantages over the expandable front bale forming means 8 of the previously described embodiments: firstly, the rollers form solid, immovable bale forming means which give a good, smooth finish to the outer shell of the bale, and secondly, the use of a plain lower roller 161 reduces, if not eliminates, the possibility of crop material being carried therearound and thus taken out of the inlet throat and lost. The pressure exerted on the front bale forming means 8 by a completed bale is relatively large compared with that exerted on the rear bale forming means 9 due to their differing surface areas and unless the shafts of the former are made sufficiently robust, there is a tendency for them to suffer damage. Furthermore, the slats 22 of the embodiments of Figures 1 to 8 act relatively aggressively on the crop material, whereby there is a tendency for the slats of the front bale formings means 8 to pull crop material from the outer surface of the bale and carry it out of the crop inlet throat of the machine whereby that material may be lost. Also the pulling of crop material from the bale gives the latter a "hairy" appearance which is undesirable. Another tendency of the slats 22 is to dig into the periphery of the bale and thus produce slight corrugations around the bale periphery. When a completed bale is discharged from the machine, these corrugations disappear because the bale expands but this produces "pockets" of less compacted or "fluffy" material which is also undesirable.

It is a general requirement that the front bale forming means are not more aggressive than the rear bale forming means and preferably are less aggressive. The use of smooth, plain rollers 161-164 meets this requirement but it may be desirable to make all but the lower roller 161 more aggressive by making the rollers other than plain such as by fitting ribs thereon or by other means. Also, the rollers 164, 163, 162 and 161 can be made progressively less aggressive.

It will be seen that the present invention provides a round baler which can produce bales with a hard outer shell whilst the density of the crop material within the outer shell can be varied greatly at will from a low density comparable to the characteristics of bales produced with conventional soft core balers to a high density as is known from balers having an expandable bale chamber, thus providing greater flexibility to the operator and combining advantages of conventional soft and hard core balers.

As already mentioned, the rotor 15 has a dual function in feeding crop material to the bale chamber from the pick-up unit 14, and in helping to support the bale as it is being completed. The rotor 15 thus performs an important part in the formation of a bale and without its presence, the pick-up unit 14 would have to be mounted much closer to the mouth of the bale chamber to an extent that it would inevitably have to support each bale being formed, and conventional pick-up units are not constructed to fulfil this purpose.

The function of the rotor 16 is also important in lending further support to each bale as it is formed and in so doing to present, in conjunction with the slats 22 a substantially smooth surface to the bale. To this end the pockets 97 are formed in the surface of the rotor 16 to accommodate the slats 22 as they pass therearound. As already explained, this prevents the slats from imparting generally vertical vibrations to the bale being formed which would impair the formation thereof.

Although the illustrated embodiments employ two expandable bale-forming members 8 and 9, the member defining the smaller portion of the bale chamber 11' (be it the front or rear member) may be replaced by one or more of a fixed type of bale-forming means employing, for example, fixedly positioned rollers, or fixedly positioned chain or belt conveyors. Alternatively, the bale-forming members 8 and 9 may be augmented by one or more fixedly positioned bale-forming means. Also the chain type bale forming means 8, 9 may be replaced by belt type bale forming members.

The present invention provides a round baler capable of producing a bale with a hard outer shell (soft core bale characteristics), and with either a relatively high density (hard core bale characteristic), or a rather low density of crop material within the outer shell, without giving rise to an over complicated structure. The machine can produce a maximum sized bale (1.2 metres in diameter) in approximately two minutes, provided crop material is fed to the bale chamber at the appropriate rate. Of this bale-forming time, between 1/3 and 1/4 is devoted to forming the hard shell, i.e. this is the period in which the runs of the chain 17 and 48 are positively supported by the "opposed sides" of all the sprockets and guide rollers provided within the envelopes formed by the respective chains. This is a very important aspect because it provides the possibility of producing with a baler of the type having an expanding bale chamber, bales with an extra hard outer shell, such as is obtained with known balers of the type having a fixed chamber and commonly referred to as soft core balers. It will be appreciated that the tension initially set in the chains 17 and 48 not only determines the hardness of the core but also influences the overall density of the bale except for the hardness of the outer shell which basically is determined by the amount of crop material fed into the bale chamber after the latter has expanded to its maximum diameter. In general, a baler in accordance with the present invention provides a core which is smaller than that provided by known soft core machines due to the positive rolling action imparted to the core by the bale-forming members. Thus the baler produces a highly satisfactory bale having qualities of both soft core and hard core bales without, as already mentioned, being of complicated mechanical construction.

Aspects of the round baler described herein are claimed in the co-pending patent applications EP-A-120.544; EP-A-120.545 and EP-A-120.546.

## Claims

1. A round baler for forming cylindrical bales (13) of crop material comprising:
- bale-forming means arranged to define a bale chamber (11, 11') which is expandable from an initial shape (11) to a generally cylindrical final shape (11'); said bale-forming means including at least one endless flexible member (8/9) having an inner operative run (60/70) and an outer run extending at opposite sides between a pair of spaced apart, fixedly positioned rotatable guide members (18, 19/49, 51), and
- at least one tensioning means (21/52) movably mounted within the envelope defined by the opposed runs (60/70,-) of the at least one flexible member (8/9) and resiliently engaging the outer run thereof for tensioning said at least one flexible member (8/9); said at least one tensioning means (21/52) permitting, by engagement on the outer run, the inner run (60/70) to expand outwardly under tension between said guide members (18, 19/49, 51) to extend along a curved path around at least a portion of the circumference of a bale (13) during the formation thereof in said bale chamber (11, 11') and said expansion of the inner run (60/70) being compensated by a corresponding shortening of the outer run resulting in a displacement of said tensioning means (21/52) in the direction towards the inner run (60/70) and opposite to the resilient force exerted thereby characterized in that
- during an initial stage of the bale formation, the inner run (60/70) expands until it is engaged by the at least one tensioning means (21/52) whereafter, during a final stage of the bale formation and as further crop material is fed into the bale chamber (11, 11'), further inward movement of said tensioning means (21/52) and expansion of the inner run (60/70) are prevented whereby said flexible member (8/9), during this final stage, is movable along a fixedly positioned path for forming a hard outer layer on the bale (13) being formed.

2. A round baler according to claim 1 characterized in that the bale chamber (11, 11') is defined by two endless flexible members (8/9) of which at least one is expandable up to a maximum expansion at which said flexible member (8/9) is movable along a fixedly positioned path.

3. A round baler according to claim 1 or 2 characterized in that the tensioning means comprise at least one upper and one lower tensioning device (53, 54, 52) each in the form of a T-shaped member (53, 54) with the crosspiece (53) thereof carrying a rotatable guide member (52) at each end and the stem (54) thereof being pivotally mounted on one end of a support arm (57) pivotally attached to the machine; a tension spring (59) being connected to each stem (54) for, when the machine is empty, pivoting each said T-shaped member (53, 54) such that only one rotatable guide member (52) thereof is in engagement with only the outer run of said at least one flexible member (9) and, when a bale (13) is being formed in the bale chamber (11, 11'), permitting each said T-shaped member (53, 54) to pivot until both rotatable guide members (52) thereof engage both said outer run and said inner operative run (70) of said at least one flexible member (9) when said bale (13) reaches its maximum diameter.

4. A round baler according to claim 3 characterized in that:
- the pivot (55) of each T-shaped member (53, 54) on the corresponding support arm (57) extends through an arcuate slot (56) in an adjacent side wall (7) of the machine, and
- the pivot (58) of each said support arm (57) on the machine is located at the centre of curvature of the associated arcuate slot (56).

5. A round baler according to claim 3 or 4, characterized in that:
- the at least one flexible member (8/9) comprises a pair of spaced apart endless chains (17/48) interconnected by a plurality of slats (22) extending transversely of the machine,
- two upper and two lower T-shaped members (53, 54) are provided; the upper, respectively the lower T-shaped members (53, 54) having a common pivot axis (55) pivotally mounting said T-shaped members (53, 54) on associated pairs of support arms (57) and one of each pair of upper T-shaped members (53, 54) and one of each pair of lower T-shaped members (53, 54) being associated with a corresponding one of said endless chains (48); the arrangement being such that the rotatable guide members (52) thereof engage, respectively are engageable with said corresponding chains (48)
- a transverse beam (61) is provided which couples the upper T-shaped members (53, 54) to each other, and
- a further transverse beam (61) is provided which interconnects the lower T-shaped members (53, 54).

6. A round baler according to claim 5 characterized in that each T-shaped tensioning member (53, 54) further also comprises two guide sprockets (115) disposed within the envelope of the associated chain (48) and operable to align this chain (48) with the rotatable guide members (52) thereon; one sprocket (115) being arranged to engage the inner run of said chain (48) when a bale (13) has reached its maximum size in the bale chamber (11, 11') and the other sprocket (115) being arranged to engage the outer run of said chain (48).

7. A round baler according to claim 1 or 2 characterized in that the at least one flexible member (9) is tensioned by tensioning means comprising at least one upper and one lower tensioning device of which the or each upper device (123, 124) comprises a first arm (123) pivotally mounted on one end of a second arm (124) and carrying at each end a rotatable guide member (52) each arranged in engagement with the associated outer run of said flexible member (9); the second arm (124) being pivotally attached at its other end to the machine and having one end of a cable (125) attached intermediate its ends and said cable (125) extending from the second arm (124), over a pulley (127) to one end of a tension spring (126), the other end of which is attached to the machine.

8. A round baler according to claims 7 characterized in that the or each lower tensioning device comprises an arm (119) mounted for sliding movement relative to the machine and carrying at each end a rotatable guide member (52) arranged in engagement with the associated outer run of said flexible member (9).

9. A round baler according to claim 8 characterized in that the or each lower tensioning arm (119) is provided with two spaced apart pins (122) which are slidably engaged in respective elongate and parallel slots (121) provided in at least one machine side wall (7) whereby the arm (119) is slidable relative to the machine.

10. A round baler according to claim 1 or 2 characterized in that the at least one flexible member (9) is tensioned by tensioning means comprising upper and lower devices each of which has:
- a fixedly positioned rotatable guide member (134, 144) engaged with the outer run of said flexible member (9);
- an arm (137, 141) pivotally mounted at one end about the axis of rotation of the associated fixedly positioned guide member (134, 144) and carrying a further rotatable guide member (136, 142) at its outer end; and
- a spring (139, 145) acting upon the arm (137, 141) to urge the further guide member (136, 142) into engagement with the outer run of said flexible member (9) to tension the latter.

11. A round baler according to claim 10 characterized in that the fixedly positioned guide member (144) of the or each upper tensioning device is adjustable in order to take up slack in said flexible member (9) occurring due to stretching of the latter.

12. A round baler according to claim 10 or 11 characterized in that the fixedly positioned guide member (134) of the or each lower tensioning device is located so as to at least help in supporting a bale (13) as it is being formed.

13. A round baler according to claim 1 or 2 characterized in that:
- the at least one flexible member (9) is tensioned by tensioning means comprising upper and lower devices each of which has a fixedly positioned rotatable guide member (134, 144) engaged with the outer run of said flexible member (9) and an arm (137, 141) pivotally mounted at one end about the axis of rotation of the associated fixedly positioned guide member (134, 144) and carrying a further rotatable guide member (136, 142) at its outer end, and
- a spring (139) is connected between the arms (137, 141) of the or each pair of associated upper and lower tensioning devices in a manner so as to urge the further rotatable guide members (136, 142) thereof into engagement with the outer run of said flexible member (9) to tension the latter.

14. A round baler according to claim 13 characterized in that:
- a further arm (138, 146) is attached to each said arm (137, 141) in an angularly offset relationship thereto,
- a link (155) is operatively associated with the or each pair of associated upper and lower tensioning devices with said link (155) being pivotally attached at one end to the machine,
- said spring (139) associated with the or each said pair of tensioning devices is connected at one end to one of said further arms (138, 146) of said pair of tensioning devices and at its other end to the other end of said link (155), and
- a pull rod (157) interconnects said link and the other further arm (146, 138) of said pair of tensioning devices;
the arrangement being such that said spring (139) urges the further guide members (136, 142) of both the upper and lower tensioning devices of said pair into engagement with the outer run of the flexible member (9) to tension the latter.

15. A round baler according to claim 14 characterized in that the further arms (138, 146) and associated link (155) of the or each pair of upper and lower tensioning devices are such that the tensioning force exerted by the upper device is greater than that of the lower device.

16. A round baler according to any of the claims 3 to 15 characterized in that the pair of spaced apart, fixedly positioned rotatable guide members (49, 51) comprise an upper rotatable member (49) mounted forwardly of the upper tensioning device and a lower rotatable member (51) mounted forwardly of the lower tensioning device; the upper and lower rotatable members (49, 51) being disposed in a generally vertical plane whereby the associated inner run (70) of the flexible member (9) extends also generally vertically when the machine is empty.

17. A round baler according to claim 1 or 2 characterized in that:
the at least one flexible member (8) is tensioned by tensioning means comprising at least one arm (116) pivotally mounted on the machine intermediate its ends and carrying at one end a rotatable guide member (21) and being connected at the other end to the machine via a tension spring (118); the latter urging said rotatable guide member (21) into engagement with the outer run of the flexible member (8) to tension said flexible member (8) and permitting the inner run (60) of said flexible member (8) to expand at the expense of the length of the outer run thereof whereby said rotatable guide member (21) is moved in the direction towards the inner run (60); the arrangement being such that, upon engagement of said rotatable guide member (21) with the inner run (60), further expansion thereof is prevented and thus said flexible member (8) is movable along a fixedly positioned path only.

18. A round baler according to claim 1 or 2 characterized in that:
- the at least one flexible member (8) is tensioned by tensioning means comprising at least one arm (131) pivotally mounted at one end about the axis of rotation of an associated fixedly positioned guide member (19) and carrying a rotatable guide member (21) at the other end, and

spring means (132) act upon said arm (131) to urge said rotatable guide member (21) into engagement with the outer run of said flexible member (8) to tension said flexible member (8) and permit the inner run (60) of said flexible member (8) to expand at the expense of the length of the outer run thereof whereby said rotatable guide member (21) is moved in the direction towards the inner run (60); the arrangement being such that, upon engagement of said rotatable guide member (21) with the inner run (60), further expansion thereof is prevented and thus said flexible member (8) is movable along a fixedly positioned path only.

19. A round baler according to claim 2 characterized in that the other one (8) of said two endless flexible members (8/9) extends around a first and fixedly positioned rotatable guide member (18) on the one hand and around second and third rotatable guide members (19, 21) rotatably carried on the respective ends of a pivot arm (23) on the other hand; the arrangement being such that:
- said arm (23) is pivotally mounted intermediate its ends on the machine and is urged about its pivot (24) by a torsion spring (28) acting between a stop (31) on the arm (23) and a stop (33) on the machine;
- said other flexible member (8) comprises an operative inner run (60) and an outer run extending between the first and second guide members (18, 19) at opposite sides of the third guide member (21),
- the torsion spring (28) urges said third guide member (21) into engagement with the outer run of said other flexible member (8) to tension the latter and whereby said flexible member (8) follows a triangular path when the machine is empty, and

said torsion spring (28) permits the inner run (60) of said other flexible member (8) to expand at the expense of the length of the outer run thereof during bale formation; said expansion causing movement of said third guide member (21) in the direction towards the inner run (60) of said other flexible member (8) until said third guide member (21) engages said inner run (60) and whereafter further expansion of said inner run (60) is prevented and thus said flexible member (8) is movable along a fixedly positioned path only.

Patentansprüche

1. Rundballenpresse zur Formung von zylindrischen Ballen (13) aus Erntematerial, mit:
- Ballenformungseinrichtungen, die so angeordnet sind, daß sie eine Ballenkammer (11, 11') umgrenzen, die von einer Ausgangsform (11) auf eine allgemein zylindrische Endform (11') ausdehnbar ist, wobei die Ballenformungseinrichtungen zumindestens ein endloses flexibles Bauteil (8, 9) einschließen, das einen inneren Arbeitsstrang (60/70) und einen äußeren Strang aufweist, die sich auf gegenüberliegenden Seiten zwischen zwei mit Abstand voneinander angeordneten stationären drehbaren Führungsteilen (18, 19/49, 51) erstrecken, und
- zumindestens einer Spanneinrichtung (21/52), die beweglich innerhalb der Umgrenzung befestigt ist, die durch die gegenüberliegenden Stränge (60/70) des zumindestens einen flexiblen Bauteils (8/9) befestigt ist und elastisch mit dessen äußerem Strang in Eingriff steht, um das zumindestens eine flexible Bauteil (8/9) zu spannen, wobei die zumindestens eine Spanneinrichtung (21/52) durch den Eingriff mit dem äußeren Strang ermöglicht, daß sich der innere Strang (60/70) unter Spannung nach außen zwischen den Führungsteilen (18, 19/49, 51) ausdehnt, sodaß er sich entlang einer gekrümmten Bahn um zumindestens einen Teil des Umfanges eines Ballens (13) während dessen Formung in der Ballenkammer (11, 11') erstreckt, und die Ausdehnung des inneren Stranges (60/70) durch eine entsprechende Verkürzung des äußeren Stranges kompensiert wird, was zu einer Bewegung der Spanneinrichtung (21/52) in Richtung auf den inneren Strang (60/70) und gegen die von der Spanneinrichtung ausgeübte elastische Kraft führt, dadurch gekennzeichnet, daß sich während einer Anfangsstufe der Ballenbildung der innere Strang (60/70) ausdehnt, bis er mit der zumindestens einen Spanneinrichtung (21/52) in Eingriff kommt, während nachfolgend während der abschließenden Stufe der Ballenformung und während weiteres Erntematerial in die Ballenkammer (11, 11') eingespeist wird, eine weitere nach innen gerichtete Bewegung der Spanneinrichtung (21/52) und eine weitere Ausdehnung des inneren Stranges (60/70) verhindert wird, sodaß das flexible Bauteil (8/9) während dieser abschließenden Stufe entlang einer stationär festgelegten Bahn beweglich ist, um eine harte äußere Schicht auf dem in Formung begriffenen Ballen (13) auszubilden.

2. Rundballenpresse nach Anspruch 1, dadurch gekennzeichnet, daß die Ballenkammer (11, 11') durch zwei endlose flexible Bauteile (8, 9) umgrenzt ist, von denen zumindestens eines bis auf eine maximale Ausdehnung ausdehnbar ist, bei der das flexible Bauteil (8, 9) entlang einer stationär festgelegten Bahn beweglich ist.

3. Rundballenpresse nach Anspruch 1 oder 2, dadurch gekennzeichnet, daß die Spanneinrichtungen zumindestens ein oberes und ein unteres Spannbauteil (53, 54, 52) umfassen, das jeweils die Form eines T-Förmigen Bauteils (53, 54) aufweist, dessen Querteil (53) an jedem Ende ein drehbares Führungsteil (52) trägt, während der Fußteil (54) des T schwenkbar an einem Ende eines Tragarmes (57) befestigt ist, der schwenkbar an der Maschine befestigt ist, daß eine Zugfeder (59) mit jedem Fußteil (54) verbunden ist, um bei leerer Maschine jedes T-förmige Bauteil (53, 54) derart zu verschwenken, daß lediglich ein drehbares Führungsteil (52) hiervon in Eingriff mit lediglich dem äußeren Strang des zumindestens einen flexiblen Bauteils (9) steht, während, wenn ein Ballen (13) in der Ballenkammer (11, 11') geformt wird, jedes T-förmige Bauteil (53, 54) verschwenkt werden kann, bis beide drehbaren Führungsteile (52) sowohl mit dem äußeren Strang als auch mit dem inneren Arbeitsstrang (70) des zumindestens einen flexiblen Bauteils (9) in Eingriff kommen, wenn der Ballen (13) seinen maximalen Durchmesser erreicht.

4. Rundballenpresse nach Anspruch 3, dadurch gekennzeichnet, daß

- sich der Schwenkpunkt (55) jedes T-förmigen Bauteils (53, 54) an dem entsprechenden Tragarm (57) durch einen bogenförmigen Schlitz (56) in einer benachbarten Seitenwand (7) der Maschine erstreckt, und

- der Schwenkpunkt (58) jedes Tragarms (57) an der Maschine am Krümmungsmittelpunkt des zugehörigen bogenförmigen Schlitzes (56) liegt.

5. Rundballenpresse nach Anspruch 3 oder 4, dadurch gekennzeichnet, daß

- das zumindestens eine flexible Bauteil (8/9) zwei mit Abstand voneinander angeordnete endlose Ketten (17/48) umfaßt, die durch eine Vielzahl von sich quer zur Maschine erstreckenden Leisten (22) verbunden sind,

- zwei obere und zwei untere T-förmige Bauteile (53, 54) vorgesehen sind, wobei die oberen bzw. die unteren T-förmigen Bauteile (53, 54) eine gemeinsame Schwenkachse (55) aufweisen, die die T-förmigen Bauteile (53, 54) schwenkbar auf zugehörigen Paaren von Tragarmen (57) haltert und wobei eines jedes Paares von oberen T-förmigen Bauteilen (53, 54) und eines jedes paares von unteren T-förmigen Bauteilen (53, 54) einer entsprechenden der endlosen Ketten (48) zugeordnet ist und die Anordnung derart ist, daß die drehbaren Führungsteile (52) hiervon mit den entsprechenden Ketten (48) in Eingriff stehen bzw. mit diesen in Eingriff bringbar sind,

- ein querverlaufender Träger (61) vorgesehen ist, der die oberen T-förmigen Bauteile (53, 54) miteinander kuppelt, und

- ein weiterer querverlaufender Träger (61) vorgesehen ist, der die unteren T-förmigen Bauteile (53, 54) miteinander verbindet.

6. Rundballenpresse nach Anspruch 5, dadurch gekennzeichnet, daß jedes T-förmige Spannbauteil (53, 54) weiterhin zwei Führungskettenräder (115) aufweist, die innerhalb des Umfanges der zugehörigen Kette (48) angeordnet und derart betätigbar sind, daß diese Kette (48) mit den daran angeordneten Führungsteilen (52) ausgerichtet wird, wobei ein Kettenrad (115) so angeordnet ist, daß es mit dem inneren Strang der Kette (48) in Eingriff kommt, wenn ein Ballen (13) seine maximale Größe in der Ballenkammer (11, 11') erreicht hat, während das andere Kettenrad (115) so angeordnet ist, daß es mit dem äußeren Strang der Kette (48) in Eingriff kommt.

7. Rundballenpresse nach Anspruch 1 oder 2, dadurch gekennzeichnet, daß das zumindestens eine flexible Bauteil (9) durch Spanneinrichtungen gespannt ist, die zumindestens ein oberes und ein unteres Spannbauteil umfassen, von denen das oder jedes obere Spannbauteil (123, 124) einen ersten Arm (123) aufweist, der schwenkbar an einem Ende eines zweiten Armes (124) befestigt ist und an jedem Ende ein drehbares Führungsteil (52) trägt, das mit dem zugehörigen äußeren Strang des flexiblen Bauteils (9) in Eingriff steht, daß der zweite Arm (124) schwenkbar mit seinem anderen Ende an der Maschine befestigt ist, wobei ein Ende eines Seils (125) an einer Stelle zwischen seinen Enden befestigt ist und sich von dem zweiten Arm (124) über eine Riemenscheibe (127) zu einem Ende einer Zugfeder erstreckt, deren anderes Ende an der Maschine befestigt ist.

8. Rundballenpresse nach Anspruch 7, dadurch gekennzeichnet, daß das oder jedes untere Spannbauteil einen Arm (119) aufweist, der für eine Gleitbewegung gegenüber der Maschine befestigt ist und an jedem Ende ein drehbares Führungsteil (52) trägt, das für einen Eingriff mit dem zugehörigen äußeren Strang des flexiblen Bauteils (9) ausgebildet ist.

9. Rundballenpresse nach Anspruch 8, dadurch gekennzeichnet, daß der oder jeder untere Spannarm (119) mit zwei mit Abstand voneinander angeordneten Stiften (122) versehen ist, die gleitend in jeweiligen langgestreckten und parallelen Schlitzen (121) in Eingriff stehen, die in zumindestens einer Maschinenseitenwand (7) ausgebildet sind, sodaß der Arm (119) gegenüber der Maschine gleitend verschiebbar ist.

10. Rundballenpresse nach Anspruch 1 oder 2, dadurch gekennzeichnet, daß das zumindestens eine flexible Bauteil (9) durch Spanneinrichtungen gespannt ist, die obere und untere Spannbauteile umfassen, von denen jedes folgende Teile aufweist:

- ein stationär angeordnetes drehbares Führungsteil (134, 144), das mit dem äußeren Strang des flexiblen Bauteils (9) in Eingriff steht,

- einen Arm (137, 141), der mit einem Ende um die Drehachse des zugehörigen stationär angeordneten Führungsteils (134, 144) schwenkbar befestigt ist und ein weiteres drehbares Führungsteil (136, 142) an seinem äußeren Ende trägt, und

- eine Feder (139, 145), die auf den Arm (137, 141) einwirkt, um das weitere Führungsteil (136, 142) in Eingriff mit dem äußeren Strang des flexiblen Bauteils (9) zu drücken, um dieses zu spannen.

11. Rundballenpresse nach Anspruch 10, dadurch gekennzeichnet, daß das stationär angeordnete Führungsteil (144) des oder jedes oberen Spannbauteils einstellbar ist, um einen Durchhang in diesem flexiblen Bauteil (9) aufzunehmen, der sich aus einer Dehnung dieses flexiblen Bauteils ergibt.

12. Rundballenpresse nach Anspruch 10 oder 11, dadurch gekennzeichnet, daß das stationär angeordnete Führungsteil (134) des oder jedes unteren Spannbauteils derart angeordnet ist, daß es zumindestens zur Abstützung eines Ballens (13) bei dessen Formung beiträgt.

13. Rundballenpresse nach Anspruch 1 oder 2, dadurch gekennzeichnet, daß

- das zumindestens eine flexible Bauteil (9) durch Spanneinrichtungen gespannt wird, die obere und untere Spannbauteile aufweisen, von denen jedes ein stationär angeordnetes drehbares Führungsteil (134, 144), das mit dem äußeren Strang des flexiblen Bauteils (9) in Eingriff steht, und einen Arm (137, 141) aufweist, der schwenkbar mit einem Ende um die Drehachse des zugehörigen stationär befestigten Führungsteil (134, 144) befestigt ist und ein weiteres drehbares Führungsteil (136, 142) an seinem äußeren Ende trägt, und

- eine Feder (139) zwischen den Armen (137, 141) des oder jedes Paares von zugehörigen oberen und unteren Spannbauteilen in einer deratigen Weise angeschlossen ist, daß die weiteren drehbaren Führungsteile (136, 142) hiervon in Eingriff mit dem äußeren Strang des flexiblen Bauteils (9) gedrückt werden, um dieses zu spannen.

14. Rundballenpresse nach Anspruch 13, dadurch gekennzeichnet, daß

- ein weiterer Arm (138, 146) an jedem Arm (137, 141) in einer winkelversetzten Beziehung hierzu befestigt ist,

- ein Gestänge (155) betriebsmäßig dem oder jedem Paar von zugehörigen oberen und unteren Spannbauteilen zugeordnet ist, wobei das Gestänge (155) schwenkbar mit einem Ende an der Maschine befestigt ist,

- die dem oder jedem paar von Spannbauteilen zugeordnete Feder (139) mit einem Ende an einem der weiteren Arme (138, 146) des paares von Spannbauteilen angeschlossen ist, während ihr anderes Ende mit dem anderen Ende des Gestänges (155) verbunden ist, und

- eine Zugstange (157) das Gestänge und den anderen weiteren Arm (146, 138) des Paares von Spannbauteilen miteinander vebindet, wobei die Anordnug derart ist, daß die Feder (139) die weiteren Führungsteile (136, 142) sowohl der oberen als auch der unteren Spannbauteile des paares in Eingriff mit dem äußeren Strang des flexiblen Bauteils (9) drückt, um dieses zu spannen.

15. Rundballenpresse nach Anspruch 14, dadurch gekennzeichnet, daß die weiteren Arme (138, 146) und das zugehörigen Gestänge (155) des oder jedes Paares von oberen und unteren Spannbauteilen derart sind, daß die von dem oberen Spannbauteil ausgeübte Spannkraft größer als die des unteren Spannbauteils ist.

16. Rundballenpresse nach einem der Ansprüche 3 bis 15, dadurch gekennzeichnet, daß die beiden mit Abstand voneinander stationär angeordneten drehbaren Führungsteile (49, 51) ein oberes drehbares Teil (49), das vor dem oberen Spannbauteil befestigt ist, und ein unteres drehbares Teil (51) umfassen, das vor dem unteren Spannbauteil befestigt ist, wobei die oberen und unteren drehbaren Teile (49, 51) in einer allgemein vertikalen Ebene angeordnet sind, sodaß sich der zugehörige innere Strang (70) des flexiblen Bauteils (90) ebenfalls allgemein vertikal erstreckt, wenn die Maschine leer ist.

17. Rundballenpresse nach Anspruch 1 oder 2, dadurch gekennzeichnet, daß das zumindestens eine flexible Bauteil (8) durch Spanneinrichtungen gespannt ist, die zumindestens einen Arm (116) aufweisen, der schwenkbar an der Maschine zwischen seinen Enden befestigt ist und an einem Ende ein drehbares Führungsteil (21) trägt, während er an seinem anderen Ende mit der Maschine über eine Feder (118) verbunden ist, daß die Zugfeder das drehbare Führungsteil (21) in Eingriff mit dem äußeren Strang des flexiblen Bauteils (8) drückt, um das flexible Bauteil (8) zu spannen und es dem inneren Stang (60) des flexiblen Bauteils (8) zu ermöglichen, sich auf Kosten der Länge des äußeren Stranges auszudehnen, wodurch das drehbare Führungsteil (21) in Richtung auf den inneren Strang (60) bewegt wird, und daß die Anordnung derart ist, daß bei Eingriff des drehbaren Führungsteils (21) mit dem inneren Strang (60) dessen weitere Ausdehnung verhindert wird, sodaß das flexible Bauteil (8) lediglich entlang einer stationär festgelegten Bahn beweglich ist.

18. Rundballenpresse nach Anspruch 1 oder 2, dadurch gekennzeichnet, daß

- das zumindestens eine flexible Bauteil (8) durch Spanneinrichtungen gespannt wird, die zumindestens einen schwenkbar mit einem Ende um eine Drehachse eines zugehörigen stationär angeordneten Führungsteils (19) befestigten Arm (131) aufweisen, der ein drehbares Führungsteil (21) an seinem anderen Ende trägt, und

- Federelemente (132) auf den Arm (131) einwirken, um das drehbare Führungsteil (121) in Eingriff mit dem äußeren Strang des flexiblen Bauteils (8) zu drücken, um das flexible Bauteil (8) zu spannen und eine Ausdehnung des inneren Stranges (60) des flexiblen Bauteils (8) auf Kosten der Länge des äußeren Stranges des flexiblen Bauteils zu ermöglichen, wodurch das drehbare Führungsteil (21) in Richtung auf den inneren Strang (60) bewegt wird, wobei die Anordnung derart ist, daß bei Eingriff des drehbaren Führungsteils mit dem inneren Strang (60) dessen weitere Ausdehnung verhindert wird, sodaß das flexible Bauteil (8) lediglich entlang einer stationär festgelegten Bahn beweglich ist.

19. Rundballenpresse nach Anspruch 2, dadurch gekennzeichnet, daß sich das andere (8) der beiden endlosen flexiblen Bauteile (8/9) um ein erstes und stationär angeordnetes drehbares Führungsteil (18) einerseits und um zweite und dritte drehbare Führungsteile (19, 21) andererseits erstreckt, die drehbar auf den jeweiligen Enden eines Schwenkarmes (23) gehaltert sind, wobei die Anordnung derart ist:

- daß der Arm (23) schwenkbar zwischen seinen Enden an der Maschine befestigt ist und um seinen Schwenkpunkt (24) mit Hilfe einer Torsionsfeder (28) vorgespannt ist, die zwischen einem Anschlag (31) an dem Arm (23) und einem Anschlag (33) auf der Maschine wirkt,
- das andere flexible Bauteil (8) einen inneren Arbeitsstrang (60) und einen äußeren strang aufweist, der sich zwischen den ersten und zweiten Führungsteilen (18, 19) auf gegenüberliegenden Seiten des dritten Führungsteils (21) erstreckt,
- die Torsionsfeder (28) das dritte Führungsteil (21) in Eingriff mit dem äußeren Strang des anderen flexiblen Bauteils (8) rückt, um letzteres zu spannen und wodurch das flexible Bauteil (8) einer dreieckigen Bahn folgt, wenn die Maschine leer ist, und
- die Torsionsfeder (28) eine Ausdehnung des inneren Stranges (60) des anderen flexiblen Bauteils (8) auf Kosten der Länge des äußeren Stranges dieses flexiblen Bauteils während der Ballenformung ermöglicht, wobei die Ausdehnung eine Bewegung des dritten Führungsteils (21) in Richtung auf den inneren Strang (60) des anderen flexiblen Bauteils (8) hervorruft, bis das dritte Führungsteil (21) mit dem inneren Strang (60) in Eingriff kommt, worauf eine weitere Ausdehnung des inneren Stranges (69) verhindert wird und damit das flexible Bauteil (8) lediglich entlang einer stationär festgelegten Bahn beweglich ist.

**Revendications**

1. Ramasseuse-presse à balles rondes pour presser des balles cylindriques (13) de produits de récolte, comportant:
- des moyens de pressage de balles conçus pour définir une chambre à balles (11, 11') extensible d'une forme initiale (11) à une forme finale dans l'ensemble cylindrique (11'); lesdits moyens de pressage de balles comprenant au moins un organe flexible sans fin (8/9) pourvu d'un brin actif intérieur (60/70) et d'un brin extérieur qui s'étend sur des côtés opposés entre deux organes de guidage mobiles en rotation (18, 19/49, 51) positionnés d'une manière fixe et espacés l'un de l'autre, et
- au moins un moyen de tension (21, 52) monté mobile à l'intérieur de l'enveloppe définie par les brins opposés (60/70,-) du ou des organes flexibles (8/9) et venant en prise d'une manière élastique avec leur brin extérieur, en vue de tendre ledit ou lesdits organes flexibles (8/9), ledit ou lesdits moyens de tension (21/52) permettant en venant, en prise avec le brin extérieur, au brin intérieur (60/70) de s'étendre vers l'extérieur sous l'effet d'une tension qui s'exerce entre lesdits organes de guidage (18, 19/49, 51) pour s'étirer le long d'une trajectoire courbe autour d'une partie au moins de la circonférence d'une balle (13) pendant le pressage de celle-ci dans ladite chambre à balles (11, 11') et ladite extension du brin intérieur (60/70) étant compensée par un raccourcissement correspondant du brin extérieur qui entraîne un déplacement desdits moyens de tension (21, 52) dans la direction orientée vers le brin intérieur (60/70) et à l'encontre de la force élastique exercée par ceux-ci,
    caractérisée en ce que
- au cours d'une étape initiale du pressage de balle le brin intérieur (60/70) s'étend jusqu'à ce qu'il soit mis en prise par le ou les moyens de tension (21/52), après quoi, au cours d'une étape finale du pressage de balle et pendant que d'autres produits de récolte sont char gés dans la chambre à balles (11, 11'), une continuation du déplacement vers l'intérieur desdits moyens de tension (21/52) et une extension supplémentaire du brin intérieur (60/70) sont rendues impossibles pour, qu'ainsi ledit organe flexible (8/9) puisse, au cours de cette étape finale, se déplacer le long d'une trajectoire positionnée d'une manière fixe, en vue de former une couche externe dure sur la balle (13) en train d'être pressée.

2. Ramasseuse-presse à balles rondes selon la revendication 1, caractérisée en ce que la chambre à balles (11, 11') est définie par deux organes flexibles sans fin (8/9) dont l'un au moins est extensible jusqu'à un point maximal auquel ledit organe flexible (8/9) peut se déplacer le long d'une trajectoire positionnée d'une manière fixe.

3. Ramasseuse-presse à balles rondes selon la revendication 1 ou 2, caractérisée en ce que les moyens de tension comportent au moins un dispositif de tension supérieur et inférieur (53, 54, 52) respectivement sous la forme d'un organe en forme de T (53, 54) dont la pièce transversale (53) porte un organe de guidage mobile en rotation (52) à chacune de ses extrémités, et dont le corps (54) est monté pivotant sur l'une des extrémités d'un bras de support (57) fixé pivotant à la machine; un ressort de tension (59) étant relié à chaque corps (54) pour, lorsque la machine est vide, faire pivoter chacun desdits organes en forme de T (53, 54), de telle façon qu'un seul de leurs organes de guidage mobiles en rotation (52) soit en prise avec le seul brin extérieur dudit ou desdits organes flexibles (9) et pour, lorsqu'une balle (13) est en train d'être pressée dans la chambre à balles (11, 11'), permettre à chacun desdits organes en forme de T (53, 54) de pivoter jusqu'à ce que leurs deux organes de guidage mobiles en rotation (52) viennent en prise à la fois avec ledit brin extérieur et avec ledit brin actif intérieur (70) dudit ou desdits organes flexibles (9), lorsque ladite balle (13) atteint son diamètre maximal.

4. Ramasseuse-presse à balles rondes selon la revendication 3, caractérisée en ce que:
- l'axe de pivotement (55) de chacun des organes en forme de T (53, 54) sur le bras de support correspondant (57) s'étend à travers une fente arquée (56) ménagée dans une paroi latérale adjacente (7) de la machine, et
- l'axe de pivotement (58) de chacun desdits bras de support (57) sur la machine est situé au niveau du centre de courbure de la fente arquée (56) associée.

5. Ramasseuse-presse à balles rondes selon la revendication 3 ou 4, caractérisée en ce que:

- le ou les organes flexibles (8/9) comportent deux chaînes sans fin (17/48) espacées l'une de l'autre et reliées entre elles par plusieurs lattes (22) qui s'étendent transversalement à la machine,

- il est prévu deux organes en forme de T supérieurs et inférieurs (53, 54), les organes en forme de T supérieurs, respectivement, inférieurs (53, 54) ayant un axe de pivotement commun (55) qui sert à monter d'une manière pivotante lesdits organes en forme de T (53, 54) sur des paires associées de bras de support (57), tandis que l'un de chaque paire d'organes en forme de T supérieurs (53, 54) et l'un de chaque paire d'organes en forme de T inférieurs (53, 54) sont associés avec une chaîne sans fin (48) correspondante, la conception étant telle que les organes de guidage mobiles en rotation (52) de ceux-ci viennent en prise avec lesdites chaînes (48) correspondantes, respectivement, sont mis en prise par celles-ci,

- il est prévu une poutre transversale (61) qui accouple les organes en forme de T supérieurs (53, 54) l'un avec l'autre, et

- il est prévu une seconde poutre transversale (61) qui relie entre eux les organes en forme de T inférieurs (53, 54).

6. Ramasseuse-presse à balles rondes selon la revendication 5, caractérisée en ce que chacun des organes de tension en forme de T (53, 54) comporte également deux pignons de guidage (115) disposés à l'intérieur de l'enveloppe de la chaîne (48) associée et aptes à opérer pour aligner cette chaîne (48) avec les organes de guidage mobiles en rotation (52) prévus sur ceux-ci; l'un des pignons (115) étant disposé pour venir en prise avec le brin intérieur de ladite chaîne (48), lorsqu'une balle (13) a atteint sa taille maximale dans la chambre à balles (11, 11'), tandis que l'autre pignon (115) est conçu pour venir en prise avec le brin extérieur de ladite chaîne (48).

7. Ramasseuse-presse à balles rondes selon la revendication 1 ou 2, caractérisée en ce que ledit ou lesdits organes flexibles (9) sont tendus par des moyens tension comportant au moins un dispositif de tension supérieur et inférieur dont le ou les dispositifs supérieurs (123, 124) comprennent un premier bras (123) monté pivotant sur l'une des extrémités d'un second bras (124) et portant, à chacune de ses extrémités, un organe de guidage mobile en rotation (52) respectivement disposé en prise avec le brin extérieur associé dudit organe flexible (9), le second bras (124) étant, au niveau de son autre extrémité, fixé pivotant à la machine et ayant l'une des extrémités d'un câble (125) fixée entre ses extrémités, tandis que ledit câble (125) s'étend depuis le second bras (124), en passant sur une poulie (127), jusqu'à l'une des extrémités d'un ressort de tension (126) dont l'autre extrémité est fixée à la machine.

8. Ramasseuse-presse à balles rondes selon la revendication 7, caractérisée en ce que le ou les dispositifs de tension inférieurs comportent un bras (119) monté en vue d'un déplacement coulissant par rapport à la machine et portant, à chaque extrémité, un organe de guidage mobile en rotation (52) disposé en prise avec le brin extérieur associé dudit organe flexible (9).

9. Ramasseuse-presse à balles rondes selon la revendication 8, caractérisée en ce que le ou les bras de tension inférieurs (119) sont pourvus de deux axes espacés l'un de l'autre (122) en prise d'une manière coulissante dans des fentes allongées et parallèles (121) respectives ménagées dans l'une au moins des parois latérales de machine (7), pour qu'ainsi le bras (119) puisse coulisser par rapport à la machine.

10. Ramasseuse-presse à balles rondes selon la revendication 1 ou 2, caractérisée en ce que le ou les organes flexibles (9) sont tendus par des moyens de tension comportant des dispositifs supérieur et inférieur dont chacun possède:

- un organe de guidage mobile en rotation (134, 144) positionné d'une manière fixe et en prise avec le brin extérieur dudit organe flexible (9);

- un bras (137, 141) monté pivotant, au niveau de l'une de ses extrémités, autour de l'axe de rotation de l'organe de guidage positionné d'une manière fixe (134, 144) associé et portant, au niveau de son extrémité extérieure, un second organe de guidage mobile en rotation (136, 142); et,

- un ressort (139, 145) agissant sur le bras (137, 141) pour solliciter le second organe de guidage (136, 142), afin qu'il vienne en prise avec le brin extérieur dudit organe flexible (9) pour tendre ce dernier.

11. Ramasseuse-presse à balles rondes selon la revendication 10, caractérisée en ce que l'organe de guidage positionné d'une manière fixe (144) du ou des dispositifs de tension supérieurs peut être ajusté, de manière à reprendre du mou présent dans ledit organe flexible (9) du fait de l'étirement de ce dernier.

12. Ramasseuse-presse à balles rondes selon la revendication 10 ou 11, caractérisée en ce que l'organe de guidage positionné d'une manière fixe (134) du ou des dispositifs de tension inférieurs est positionné de façon à au moins aider à supporter une bale (13) pendant qu'elle est en train d'être pressée.

13. Ramasseuse-presse à balles rondes selon la revendication 1 ou 2, caractérisée en ce que:

- le ou les organes flexibles (9) sont tendus par des moyens de tension comportant des dispositifs supérieur et inférieur dont chacun possède un organe de guidage mobile en rotation et positionné d'une manière fixe (134, 144) en prise avec le brin extérieur dudit organe flexible (9), et un bras (137, 141) monté pivotant, au niveau de l'une de ses extrémités, autour de l'axe de rotation de l'organe de guidage positionné d'une manière fixe (134, 144) associé et portant, au niveau de son extrémité extérieure, un second organe de guidage mobile en rotation (136, 142), et

- un ressort (139) est monté entre les bras (137, 141) de la ou des paires de dispositifs de tension supérieur et inférieur associés, de manière à solliciter les seconds organes de guidage mobiles en rotation (136, 142) de ceux-ci pour qu'ils viennent en prise avec le brin extérieur dudit organe flexible (9), afin de tendre ce dernier.

14. Ramasseuse-presse à balles rondes selon la revendication 13, caractérisée en ce que:

- un bras supplémentaire (138, 146) est fixé à chacun desdits bras (137, 141) dans une relation décalée angulairement par rapport à ceux-ci,

- une pièce de liaison (155) est associée d'une manière fonctionnelle avec la ou les paires de dispositifs de tension supérieur et inférieur associés, ladite pièce de liaison (155) étant, au niveau de l'une de ses extrémités, fixée pivotante à la machine,

- ledit ressort (139) associé avec la ou les paires de dispositifs de tension est, au niveau de l'une de ses extrémités, relié à l'un desdits bras supplémentaires (138, 146) de ladite paire de dispositifs de tension et, au niveau de son autre extrémité, à l'autre extrémité de ladite pièce de liaison (155), et

- un bras oscillant (157) relie entre eux ladite pièce de liaison et l'autre bras supplémentaire (146, 138) de ladite paire de dispositifs de tension,

la conception étant telle que ledit ressort (139) sollicite les seconds organes de guidage (136, 142) des deux dispositifs de tension supérieur et inférieur de ladite paire pour qu'ils viennent en prise avec le brin extérieur de l'organe flexible (9), afin de tendre ce dernier.

15. Ramasseuse-presse à balles rondes selon la revendication 14, caractérisée en ce que les bras supplémentaires (138, 146) et la pièce de liaison (155) associée de la ou des paires de dispositifs de tension supérieur et inférieur sont tels que la force de tension exercée par le dispositif supérieur excède celle exercée par le dispositif inférieur.

16. Ramasseuse-presse à balles rondes selon l'une quelconque des revendications 3 à 15, caractérisée en ce que la paire d'organes de guidage mobiles en rotation, positionnés d'une manière fixe et espacés l'un de l'autre (49, 51) comporte un organe mobile en rotation supérieur (49) monté en avant du dispositif de tension supérieur, et un organe mobile en rotation inférieur (51) monté en avant du dispositif de tension inférieur, les organes mobiles en rotation supérieur et inférieur (49, 51) étant disposés dans un plan dans l'ensemble vertical, pour qu'ainsi le brin intérieur (70) associé de l'organe flexible (9) s'étendent lui-aussi dans l'ensemble verticalement lorsque la machine est vide.

17. Ramasseuse-presse à balles rondes selon la revendication 1 ou 2, caractérisée en ce que:

le ou les organes flexibles (8) sont tendus par des moyens de tension comportant au moins un bras (116) monté pivotant entre ses extrémités sur la machine, qui porte, au niveau de l'une de ses extrémités, un organe de guidage mobile en rotation (21) et est, au niveau de son autre extrémité, relié à la machine par l'intermédiaire d'un ressort de tension (118), ce dernier sollicitant ledit organe de guidage mobile en rotation (21) pour qu'il vienne en prise avec le brin extérieur de

l'organe flexible (8), afin de tendre ledit organe flexible (8), et permettant au brin intérieur (60) dudit organe flexible (8) de s'étirer aux dépens de la longueur de son brin extérieur, pour qu'ainsi ledit organe de guidage mobile en rotation (21) soit déplacé dans la direction orientée vers le brin intérieur (60), la conception étant telle que lorsque ledit organe de guidage en rotation (21) vient en prise avec le brin intérieur (60), celui-ci ne peut plus continuer à s'étirer et ledit organe flexible (8) est ainsi déplaçable uniquement le long d'une trajectoire positionnée d'une manière fixe.

18. Ramasseuse-presse à balles rondes selon la revendication 1 ou 2, caractérisée en ce que:

- le ou les organes flexibles (8) sont tendus par des moyens de tension comportant au moins un bras (131) monté pivotant, au niveau de l'une de ses extrémités, autour de l'axe de rotation d'un organe de guidage positionné d'une manière fixe (19) associé, et portant, au niveau de son autre extrémité, un organe de guidage mobile en rotation (21), et

- des moyens élastiques (132) agissent sur ledit bras (131) pour solliciter ledit organe de guidage mobile en rotation (21), afin qu'il vienne en prise avec le brin extérieur dudit organe flexible (8) pour tendre ledit organe flexible (8) et permettre à son brin intérieur (60) de s'étirer aux dépens de la longueur de son brin extérieur, pour qu'ainsi ledit organe de guidage mobile en rotation (21) soit déplacé dans la direction orientée vers le brin intérieur (60), la conception étant telle que, lorsque ledit organe de guidage mobile en rotation (21) vient en prise avec le brin intérieur (60), celui-ci ne peut plus continuer à s'étirer et ledit organe flexible (8) est ainsi déplaçable uniquement le long d'une trajectoire positionnée d'une manière fixe.

19. Ramasseuse-presse à balles rondes selon la revendication 2, caractérisée en ce que le second (8) desdits deux organes flexibles sans fin (8/9) s'étend, d'une part, autour d'un premier organe de guidage mobile en rotation et positionné d'une manière fixe (18) et, d'autre part, autour de second et troisième organes de guidage mobiles en rotation (19, 21) montés rotatifs sur les extrémités respectives d'un bras de pivotement (23), la conception étant telle que:

- ledit bras (23) est monté pivotant, entre ses extrémités, sur la machine et sollicité autour de son pivot (24) par un ressort de torsion (28) qui agit entre une butée (31) prévue sur le bras (23) et une butée (33) prévue sur la machine;

- ledit second organe flexible (8) comporte un brin intérieur actif (60) et un brin extérieur qui s'étend entre les premier et second organes de guidage (18, 19) sur des côtés opposés du troisième organe de guidage (21),

- le ressort de torsion (28) sollicite ledit troisième organe de guidage (21) pour qu'il vienne en prise avec le brin extérieur dudit second organe flexible (8), afin de tendre ce dernier et qu'ainsi ledit organe flexible (8) suive une trajectoire triangulaire, lorsque la machine est vide, et

- ledit ressort de torsion (28) permet au brin intérieur (60) dudit second organe flexible (8) de s'étirer aux dépens de la longueur de son brin extérieur pendant un pressage de balle; ladite extension entraînant un déplacement dudit troisième organe de guidage (21) dans la direction orientée vers le brin intérieur (60) dudit second organe flexible (8) jusqu'à ce que ledit troisième organe de guidage (21) vienne en prise avec ledit brin intérieur (60), après quoi, ledit brin intérieur (60) ne peut plus continuer à s'étirer, et ledit organe flexible (8) est ainsi déplaçable uniquement le long d'une trajectoire positionnée d'une manière fixe.

EP 0 121 279 B1

FIG.1

1

FIG.2

2

FIG.3

FIG.4

EP 0 121 279 B1

FIG.5

4

FIG. 6

FIG 7

FIG. 8

**FIG. 9**

FIG.10